# EUROPÄISCHE PATENTSCHRIFT

(11) **EP 2 831 458 B1**
(45) Veröffentlichungstag und Bekanntmachung des Hinweises auf die Patenterteilung: **16.09.2020**
(21) Anmeldenummer: 13711439.3
(22) Anmeldetag: 22.03.2013
(51) Int. Cl.: F16D 65/18, F16D 65/56, F16D 66/02

(54) **SCHEIBENBREMSE MIT EINER SENSOREINRICHTUNG UND VERFAHREN ZUM ERMITTELN VON VERSCHLEISS UND BETÄTIGUNGSHUB EINER ENTSPRECHENDEN SCHEIBENBREMSE**
DISK BRAKE HAVING A SENSOR DEVICE AND METHOD FOR DETERMINING WEAR AND AN ACTUATION STROKE OF A CORRESPONDING DISK BRAKE
FREIN À DISQUE POURVU D'UN DISPOSITIF DÉTECTEUR ET PROCÉDÉ PERMETTANT DE DÉTERMINER L'USURE ET LA COURSE D'ACTIONNEMENT D'UN FREIN À DISQUE CORRESPONDANT

(30) Priorität: 26.03.2012 DE 102012102582
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, Jose, 82008 Unterhaching (DE); STAAHL, Christian, 81929 München (DE); MILLER, Bernhard, 71263 Weil der Stadt (DE); TRIMPE, Robert, 82234 Weißling (DE); SEIDENSCHWANG, Matthias, 81249 München (DE)
(86) Internationale Anmeldenummer: PCT/EP2013/056154
(87) Internationale Veröffentlichungsnummer: WO 2013/144037

(56) Entgegenhaltungen:
- EP-A1- 0 789 156
- DE-A1-102007 026 463
- DE-A1-102010 032 515

## Beschreibung

Die Erfindung betrifft eine Scheibenbremse, insbesondere für ein Kraftfahrzeug, nach dem Oberbegriff des Anspruchs 1. Die Erfindung bezieht sich auch auf ein Verfahren zum Ermitteln von Verschleiß und Betätigungshub einer entsprechenden Scheibenbremse.

Derartige Scheibenbremsen sind üblicherweise druckluftbetätigt und mit automatisch wirkenden, mechanischen Belagverschleißnachstellvorrichtungen ausgestattet. Diese Belagverschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet.

Ein Bremsbelag- und Bremsscheibenverschleiß kann derzeit durch einen Sensor in rotatorischer oder linearer Weise erfasst werden. Dabei werden in der Regel der Summenverschleiß beider Bremsbeläge und der Verschleiß der Bremsscheibe erfasst. Der Verschleißwert wird von dem Sensor z.B. als ein Spannungssignal ausgegeben.

Das Dokument DE 10 2010 032 515 A1 beschreibt einen Bremsverschleißsensor einer Scheibenbremse mit einer Sensoreinheit, einem mit der Sensoreinheit zusammenwirkenden Getriebe und einem zentralen Antriebselement, welches mit dem Getriebe in Eingriff steht, für eine einem Bremsverschleiß zugeordnete Eingangs- oder Kenngröße.

Dokument EP 0 789 156 A1 offenbart eine Scheibenbremse gemäß dem Oberbegriff vom Anspruch 1.

Die Aufgabe der vorliegenden Erfindung besteht darin, eine verbesserte Scheibenbremse zu schaffen.

Eine weitere Aufgabe ist, ein verbessertes Verfahren zum Ermitteln von Verschleiß und Betätigungshub einer Scheibenbremse bereitzustellen.

Die Aufgabe wird durch eine Scheibenbremse mit den Merkmalen des Anspruchs 1 gelöst.

Die Aufgabe wird auch durch ein Verfahren mit den Merkmalen des Anspruchs 11 gelöst.

Die erfindungsgemäße Scheibenbremse weist eine gemeinsame Sensoreinrichtung auf, welche eine Verschleißsensoreinrichtung und eine Betätigungshub-Sensoreinrichtung in einer gemeinsamen Einrichtung integriert. D.h., dass die gemeinsame Sensoreinrichtung mittels eines gleichen Sensors zwei Größen erfasst. Somit wird Bauraum eingespart. Zusätzlich werden ein Sensor und die dafür benötigte Informationsleitung und somit auch Geld eingespart.

Eine erfindungsgemäße Scheibenbremse, insbesondere für ein Kraftfahrzeug, mit einer Zuspannvorrichtung mit einer Spreizmechanik, vorzugsweise mit einem Bremsdrehhebel, einer Belagverschleißnachstellvorrichtung, welche mindestens einen mechanischen Verschleißnachsteller aufweist, der vorzugsweise in eine Spindeleinheit der Scheibenbremse einsetzbar und mit der Spreizmechanik, vorzugsweise mit dem Bremsdrehhebel, gekoppelt ist, einer Verschleißsensoreinrichtung zur Erfassung eines Verschleißwertes und einer Betätigungshub-Sensoreinrichtung zur Erfassung eines Betätigungshubes ist geschaffen. Die Verschleißsensoreinrichtung und die Betätigungshub-Sensoreinrichtung sind in einer gemeinsamen Sensoreinrichtung zusammen integriert. Die Spreizmechanik, vorzugsweise der Bremsdrehhebel, ist über eine Nachstellwelle des mindestens einen mechanischen Verschleißnachstellers mit der gemeinsamen Sensoreinrichtung und über ein Zwischengetriebe, das mindestens zwei Getriebestufen mit einer Übertragungswelle aufweist, mit der gemeinsamen Sensoreinrichtung gekoppelt.

Das Zwischengetriebe weist einen Hebelwinkelgeber mit einem Hebelwinkelantriebsabschnitt mit einem Hebelwinkelantriebselement und eine Zwischenwelle auf, wobei das Hebelwinkelantriebselement des Hebelwinkelgebers mit der Zwischenwelle über ein Zwischenantriebsrad mit Kronenradverzahnung oder Kegelradverzahnung gekoppelt ist, und wobei ein Zwischenabtriebsrad der Zwischenwelle mit einem Übertragungsantriebsrad der Übertragungswelle eine erste Getriebestufe der mindestens zwei Getriebestufen bildet.

Dies ist eine Parallelschaltung zweier Kraft- und Signalflüsse, die von einander getrennt sind und in der Sensoreinrichtung geeignet zusammengeführt werden. Hierbei weist das Zwischengetriebe zwei Getriebestufen auf. Natürlich sind auch mehr Getriebestufen möglich. Mittels des Ubersetzungsverhältnisses der Getriebestufen ist eine weite Anpassung von Drehwinkeln möglich.

Dadurch kann die Trennung der Erfassung der beiden Werte exakt ermöglicht werden.
Auf diese Weise wird nur ein Sensorelement zur Erfassung von zwei Werten, nämlich für den Verschleißwert und den Betätigungshubwert benötigt. Der Verschleißwert betrifft den Verschleiß von Bremsbelägen und Bremsscheibe der Scheibenbremse. Mit dem Betätigungshubwert ist ein Hebelschwenkwinkel eines Bremsdrehhebels oder auch ein Verstellweg eines Zuspannelementes gemeint.

Ein erfindungsgemäßes Verfahren zum Ermitteln von Verschleiß und Betätigungshub einer solchen Scheibenbremse umfasst die Verfahrensschritte:
(S1) Erfassen eines Verschleißwertes und eines Betätigungshubwertes und Bilden von zwei Eingangsgrößen; (S2) Überlagern der gebildeten zwei Eingangsgrößen und Ausgeben eines Drehwinkels für einen Winkelsensor; und (S3) Ermitteln des Verschleißwertes und des Betätigungshubwertes anhand einer Sensorausgangsspannung des Winkelsensors.

Weitere vorteilhafte Ausgestaltungen sind in den Unteransprüchen angegeben.

In einer Ausführung weist die Scheibenbremse mindestens zwei Spindeleinheiten auf, wobei der mindestens eine mechanische Verschleißnachsteller mit einer Mitnehmerwelle über ein Synchronmittel gekoppelt ist. Hierbei ist die gemeinsame Sensoreinrichtung auf der Mitnehmerwelle angeordnet. Dies ergibt einen kompakten Aufbau und ein Drehwinkel der Mitnehmerwelle kann als eine Eingangsgröße direkt in die Sensoreinrichtung eingeleitet werden.

In einer noch weiteren Ausführung ist vorgesehen, dass die gemeinsame Sensoreinrichtung über ein Überlagerungsgetriebe mit der Nachstellwelle des mindestens einen mechanischen Verschleißnachstellers und dem Zwischengetriebe gekoppelt ist. So werden die Bewegungen der beiden Eingangsgrößen zusammengeführt und überlagert, so dass Betätigungshub und Nachstellweg, der dem Verschleiß entspricht, bestimmt werden können. Es ist zudem vorgesehen, dass das Überlagerungsgetriebe ein Planetengetriebe ist. Planetengetriebe sind als Präzisionszukaufteile im Handel erhältlich. Da keine großen Drehmomente zu übertragen sind, sind Zahnräder aus Kunststoff mit geringem Gewicht einsetzbar.

In einer Ausführung ist die Spreizmechanik, vorzugsweise der Bremsdrehhebel, über das Zwischengetriebe mit der gemeinsamen Sensoreinrichtung mit einem Hohlrad des Planetengetriebes des Überlagerungsgetriebes gekoppelt. So wird Bauraum eingespart und ein kompakter Aufbau ermöglicht.

Eine Überlagerung der Eingangsgrößen kann so gestaltet sein, dass eine Addition oder Subtraktion der Eingangsgrößen vorgenommen wird. Die Eingangsgrößen sind bevorzugt Drehwinkel.

Die Übersetzungen der Getriebestufen und des Überlagerungsgetriebes können so ausgelegt werden, dass die zwei Bewegungen für die beiden Eingangsgrößen eindeutige voneinander trennbar sind.

In einer anderen Ausführung weist die gemeinsame Sensoreinrichtung einen mit dem Überlagerungsgetriebe verbundenen Winkelsensor auf. Es können unterschiedliche Winkelsensoren verwendet werden, so z.B. ein Potentiometer. Auch dieses Element ist auf dem Markt in hoher Qualität kostengünstig verfügbar.

Der Winkelsensor kann z.B. ein nach dem Ohm'schen Gesetz oder Piezowiderstandseffekt wirkender, thermischer, optischer, induktiver, galvanomagnetischer, magnetoelastischer, magnetischer, kapazitiver, piezoelektrischer, chemischer oder pyroelektrischer Sensor sein.

In einer weiteren Ausführung ist/sind das Zwischengetriebe oder/und das Überlagerungsgetriebe so ausgebildet, dass ein Drehwinkel der gemeinsame Sensoreinrichtung über einen gesamten Verschleißweg des Verschleißnachstellers einen maximalen Wert von kleiner gleich 360° aufweist. So können z.B. handelsübliche kostengünstige und qualitativ hochwertige Potentiometer mit einem Drehwinkel von beispielsweise 270° verwendet werden.

Es ist vorgesehen, dass die gemeinsame Sensoreinrichtung zur Ausgabe eines gemeinsamen Ausgangssignals für den erfassten Verschleißwert und den erfassten Betätigungshubwert ausgebildet ist. So können unterschiedliche Auswerteeinheiten eingesetzt werden.

In einer noch weiteren Ausführung ist vorgesehen, dass die gemeinsame Sensoreinrichtung zur Ausgabe eines gemeinsamen Spannungssignals für den erfassten Verschleißwert und den erfassten Betätigungshubwert ausgebildet ist.

Zur weiteren Auswertung der erfassten Werte in Spannungswerte ist die gemeinsame Sensoreinrichtung mit einer Auswerteschaltung verbunden, die separat oder/und in einem Bremssteuergerät der Scheibenbremse angeordnet ist.

Die oben beschrieben Scheibenbremse kann eine druckluftbetätigte Scheibenbremse sein.

In einer Ausführung des Verfahrens ist vorgesehen, dass beim Verfahrensschritt Erfassen eines Verschleißwertes und eines Betätigungshubwertes folgende Teilschritte durchgeführt werden: (S1.1) Bilden der ersten Eingangsgröße als Drehwinkel einer Nachstellerwelle oder einer mit der Nachstellerwelle synchron gekoppelten Mitnehmerwelle; und (S1.2) Bilden der zweiten Eingangsgröße als Drehwinkel eines Zwischengetriebes. Drehwinkel sind einfach und auf kleinem Raum durch Rädergetriebe zu übertragen.

In einer weiteren Ausführung des Verfahrens werden beim Verfahrensschritt Ermitteln des Verschleißwertes und des Betätigungshubwertes folgende Teilschritte durchgeführt: (S3.1) Bilden einer Spannungsdifferenz als Verschleißwert; (S3.2) Bilden einer Spannungsdifferenz als Betätigungshubwert; und (S3.3) Bilden eines Spannungswertes als Gesamtverschleißwert. Die Spannungen sind in einer Auswerteschaltung einfach zu verarbeiten. Es sind ebenfalls einfache und schnelle Auswertungsvorgänge möglich.

Ein weiteres Verfahren zum Ermitteln von Verschleiß und Betätigungshub der oben beschriebenen Scheibenbremse weist die Verfahrensschritte auf: (S1) Erfassen eines Verschleißwertes und eines Betätigungshubwertes und Bilden von zwei Eingangsgrößen; (S2) Überlagern der gebildeten zwei Eingangsgrößen und zur Bereitstellen eines Drehwinkels als Ausgabewert für einen Winkelsensor; und (S3) Ermitteln des Verschleißwertes und des Betätigungshubwertes anhand eines Sensorausgangssignals des Winkelsensors.

Dabei werden beim Verfahrensschritt Erfassen eines Verschleißwertes und eines Betätigungshubwertes folgende Teilschritte durchgeführt: (S1.1) Bilden der ersten Eingangsgröße als Drehwinkel einer Nachstellerwelle oder einer mit der Nachstellerwelle synchron gekoppelten Mitnehmerwelle; und (S1.2) Bilden der zweiten Eingangsgröße als Drehwinkel eines Zwischengetriebes.

Besonders vorteilhaft ist es, wenn mindestens eine der beiden Eingangsgrößen mechanisch verstärkt wird. Dadurch wird ein Messeffekt verbessert, wobei eine Auswertung leichter erfolgen kann.

In einer weiteren Ausführung wird das Sensorausgangssignal des Winkelsensors kontinuierlich abgetastet und in Form seiner Werte abgespeichert. So ist eine Auswertung sofort und auch zeitnah nach einer Bremsung möglich.

Weiterhin ist vorgesehen, dass im Verfahrensschritt (S3) Ermitteln des Verschleißwertes und des Betätigungshubwertes für eine Auswertung sowohl die gespeicherten Werte des Sensorausgangssignals wie auch mindestens ein abgespeicherter Wert, welcher dem Verschleiß bei der letzten Auswertung zugeordnet ist, verwendet werden. Damit ist eine einfache Auswertung erzielt.

Es wird nur ein Sensor für zwei zu erfassende Größen benötigt. Es wird außerdem nur ein Spannungssignal zur Auswertung ausgeben. Aus diesem Grund ist nur eine elektrische Zweidrahtleitung mit einer Masse und einer Signalleitung erforderlich. Dies vereinfacht Verkabelungs- und Installationsarbeiten. Eine Spannungsweite z.B. von 0 bis 5 V kann so aufgeteilt werden, dass z.B. 0,5 bis 1,5 V für den Betätigungshub und 1,5 bis 4 V für das Verschleißsignal verwendet werden. Natürlich sind andere Aufteilungen möglich. So können anstelle von Spannungen auch Ströme ausgegeben werden.

Die Spreizmechanik treibt zwei Antriebe an, nämlich zum Einen den Verschleißnachtsteller mit der Nachstellwelle und der Mitnehmerwelle und zum Anderen das Zwischengetriebe des Betätigungshub-Sensors, welche beide auf die gemeinsame Sensoreinrichtung zusammengeführt werden.

Das Betätigungshubsignal wird dem Verschleißsignal überlagert.

Die Auswertung der Sensorausgangssignale bzw. einer Sensorausgangsspannung von zwei Größen erfolgt bei Übertragung über eine gemeinsame Leitung zu einer Auswerteschaltung.

Die Getriebeübersetzungen können auch so ausgelegt werden, dass im Falle eines Potentiometers kein teures Mehrgangpotentiometer, sondern z.B. ein kostengünstiges Potentiometer mit einem Drehwinkel von ca. 270° verwendbar ist.

Das Antriebselement kann auch von einer autark wirkenden Nachstellmechanik angetrieben werden.

Das Planetengetriebe kann dergestalt ausgelegt werden, dass
- die erste Eingangsgröße eine Verdrehung der Sensoreinrichtung in entgegengesetzter Richtung zu der zweiten Eingangsgröße bewirkt,
- eine Zustandsänderung für eine Auswertelogik über einen deutlichen Knick in einer Kurve des Ausgangssignals der Sensoreinrichtung erfassbar ist,
- eine Gesamtverdrehung der Sensoreinrichtung auf einen bestimmten Wert (z.B. 360°, 270°) begrenzbar ist,
- eine Verstärkung mindestens einer der beiden Eingangsgrößen über eine mechanische Übersetzung (mithilfe von vorgeschalteten Getrieben) möglich ist, so dass ein Messeffekt bzw. eine Auflösung verbessert ist.

Die Erfindung wird nun anhand einer beispielhaften Ausführung mit Bezug auf die beigefügten Zeichnungen näher erläutert. Hierbei zeigen:
- Fig. 1: eine schematische Perspektivansicht eines ersten Ausführungsbeispiels einer erfindungsgemäßen Scheibenbremse mit einer Belagverschleißnachstellvorrichtung und einer erfindungsgemäßen Sensoreinrichtung;
- Fig. 2...3: vergrößerte Darstellungen der erfindungsgemäßen Sensoreinrichtung nach Fig. 1;
- Fig. 4: ein schematisches Sinnbild eines Kraftflusses;
- Fig. 4a: ein beispielhafter Signalflussplan;
- Fig. 5: eine vereinfachte schematische grafische Darstellung einer beispielhaften Sensorausgangsspannung in Abhängigkeit von einem Drehwinkel;
- Fig. 6: ein beispielhaftes Flussdiagramm eines erfindungsgemäßen Verfahrens;
- Fig. 7: ein weiterer beispielhafter Signalflussplan;
- Fig. 8: eine schematische grafische Darstellung eines Drehwinkels mit Erfassung von zwei Eingangsgrößen;
- Fig. 9: eine schematische grafische Darstellung des Drehwinkels über der Zeit;
- Fig. 10-10a: schematische grafische Darstellungen idealer Sensorwerte; und
- Fig. 11-11a: schematische grafische Darstellungen von Sensorwerten.

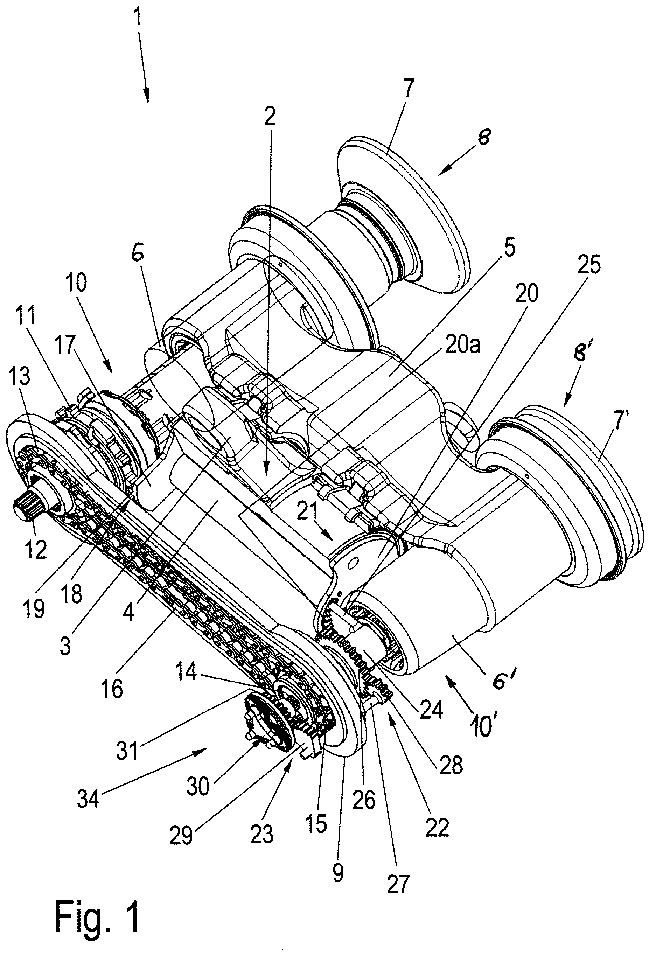

In Fig. 1 ist eine schematische Perspektivansicht eines ersten Ausführungsbeispiels einer erfindungsgemäßen Scheibenbremse 1 mit einer Belagverschleißnachstellvorrichtung 10 und einer erfindungsgemäßen Sensoreinrichtung 34 dargestellt.

In diesem Ausführungsbeispiel ist die Scheibenbremse 1 in einer Ausführung als zweistempelige Bremse mit einem nicht gezeigten Bremssattel, welcher eine nicht gezeigte Bremsscheibe übergreift, und einem Bremsdrehhebel 2 zur Zuspannung der Scheibenbremse 1 ausgebildet. Der Bremsdrehhebel 2 wird auch als Spreizmechanik bezeichnet, ist Teil einer Zuspannvorrichtung und weist einen Hebelarm 3 auf, welcher z.B. von einem Druckluftbremszylinder betätigbar ist. Der Bremsdrehhebel 2 ist hier über eine Lagerwalze 4 am Bremssattel um eine Längsachse der Lagerwalze 4 verschwenkbar gelagert.

Eine Brücke 5 steht mit dem Bremsdrehhebel 2 in Kontakt und ist von diesem beim Zuspannen und Lösen der Bremse betätigbar. Die Brücke 5 ist an ihren Enden jeweils mit einer Spindeleinheit 6, 6' über jeweils einen Druckstempel 8, 8' gekoppelt. Die in Fig. 1 rechts oben angeordneten Enden der Spindeleinheiten 6, 6' weisen jeweils ein Druckstück 7, 7' auf. Die Druckstücke 7, 7' stehen mit einem nicht gezeigten zuspannseitigen Bremsbelag in Kontakt, welcher auf einer Seite der nicht gezeigten Bremsscheibe der Scheibenbremse 1 angeordnet ist. Auf der anderen Seite der Bremsscheibe ist ein anderer Bremsbelag im Bremssattel festgelegt. Der Bremssattel kann beispielsweise ein Schiebesattel sein.

Ein Abstand zwischen einem Bremsbelag und der Bremsscheibe wird als Lüftspiel bezeichnet. Bei einem Bremsvorgang wird bei Betätigung der Bremse zunächst das Lüftspiel überbrückt, indem der Bremsbelag durch die vom Bremshebel 2 betätigte Brücke 5 gegen die Bremsscheibe der Bremse verstellt wird. Aufgrund des Verschleißes der Bremsbeläge und auch der Bremsscheibe wird das Lüftspiel vergrößert.

Der Begriff "Reibepunkt" ist der Punkt, in welchem der Bremsbelag an der Bremsscheibe der Scheibenbremse 1 anliegt. Der Reibepunkt wird beim Zuspannen nach Überbrückung des Lüftspiels erreicht. Weiteres Zuspannen bewirkt dann durch Anpressen des Bremsbelags an die Bremsscheibe eine Bremsung. Ein Lösen der Zuspannvorrichtung bewirkt eine Umkehrung des oben beschriebenen Vorgangs.

Die Scheibenbremse 1 umfasst in der in Fig. 1 gezeigten Ausführung außerdem einen Verschleißnachsteller 10, welcher zur Nachstellung des Bremsbelags/der Bremsbeläge bei Verschleiß dient, um das ursprüngliche Lüftspiel wiederherzustellen.

Der Verschleißnachsteller 10 wird hier nicht näher erläutert, er kann z.B. wie in DE 10 2004 037 771 A1 beschrieben ausgestaltet sein. Er ist in der Spindeleinheit 6 eingesetzt und mit dieser gekoppelt. Ein Nachstellerantriebsrad 11 des Verschleißnachstellers 10 ist für den Antrieb des Verschleißnachstellers 10 durch den Bremsdrehhebel 2 vorgesehen, was unten noch näher erläutert wird. Der Verschleißnachsteller 10 weist eine Nachstellerwelle 12 auf, deren zuspannseitiges Ende mit einem Nachstellersynchronrad 13, hier ein Kettenrad, drehfest verbunden ist. Das Nachstellersynchronrad 13 steht über ein Synchronmittel 16, hier eine Kette, mit einem Mitnehmersynchronrad 15, das auf dem zuspannseitigen Ende einer Mitnehmerwelle 14 drehfest angeordnet ist, in Verbindung. Auf diese Weise ist der Verschleißnachsteller 10 mit der Mitnehmerwelle 14 gekoppelt, welche mit der Spindeleinheit 6' verbunden ist und eine Nachstellbewegung des Verschleißnachstellers 10 der einen Spindeleinheit 6 auf die andere Spindeleinheit 6' synchron überträgt. Die Mitnehmerwelle 14 ist parallel zum Verschleißnachsteller 10 angeordnet. Die zuspannseitigen Enden der Nachstellerwelle 12 und der Mitnehmerwelle 14 erstrecken sich durch eine Halterung 9, welche unterhalb der Synchronräder 13, 15 vorgesehen ist.

Der Verschleißnachsteller 10 wird durch jede Zustellbewegung des Bremsdrehhebels 2, bei welcher der Bremsdrehhebel 2 um die Längsachse der Lagerwelle 4 verschwenkt, angetrieben. Dies erfolgt über eine Nachstellerantriebskopplung 18 zwischen dem Nachstellerantriebsrad 11 und einem Nachstellerantriebsabschnitt 17 des Bremsdrehhebels 2. Dazu weist das Nachstellerantriebsrad 11 Zähne auf, welche mit einem oder mehreren Nachstellerantriebselementen 18, die als entsprechende Zähne ausgebildet sind, in Eingriff stehen.

Der Nachstellerantriebsabschnitt 17 des Bremsdrehhebels 2 ist hier scheibenförmig oder scheibensegmentförmig ausgebildet und an dem Ende der Lagerwalze 4 am Bremsdrehhebel 2 drehfest angebracht, welches zu der Spindeleinheit 6 mit dem Verschleißnachsteller 10 weist. Hier sind die Nachstellerantriebselemente 18 als Zähne eines Kronenrads gestaltet. Die Lagerwelle 4 und die Nachstellerwelle 12 sind rechtwinklig zueinander angeordnet.

Wenn bei der Zustellbewegung des Bremsdrehhebels 2 (noch) kein Verschleiß vorliegt, dann erfolgt aufgrund z.B. einer Überlastkupplung des Verschleißnachsteller 10 keine Übertragung einer Antriebsbewegung auf die Nachstellerwelle 12. Liegt jedoch ein Verschleiß vor, so wird die Antriebsbewegung auf die Nachstellerwelle 12 des Verschleißnachstellers 10 übertragen, um den Bremsbelag nachzustellen und das Lüftspiel auf den ursprünglichen Wert einzustellen. Mit dem Synchronisationsmittel 16 wird diese Antriebsbewegung der Nachstellerwelle 12 zur Verschleißnachstellung auf die Mitnehmerwelle 14 übertragen.

Die Scheibenbremse 1 ist zudem mit einer Sensoreinrichtung 34 ausgerüstet, welche zur Erfassung des Verschleißes vorgesehen ist. Die Sensoreinrichtung 34 ist koaxial zu der Spindeleinheit 6' auf der Mitnehmerwelle 12 angeordnet und derart gestaltet, dass mit der gleichen Sensoreinrichtung 34 auch eine weitere Größe erfassbar ist. Diese weitere Größe ist in dem vorliegenden Fall der Betätigungshub des Bremsdrehhebels 2.

Die Sensoreinrichtung 34 umfasst in diesem Ausführungsbeispiel ein Überlagerungsgetriebe 30, z.B. ein Planetengetriebe, welches mit zwei Eingangsgrößen beaufschlagt ist. Dabei ist die erste Eingangsgröße α_{V} ein dem Verschleiß von Bremsbelägen und Bremsscheibe der Scheibenbremse 1 entsprechender Wert, nämlich ein erster Drehwinkel der Mitnehmerwelle 14, welcher aufgrund des Synchronmittels 16 dem Drehwinkel der Nachstellerwelle 12 entspricht und somit ein Maß für den Verschleiß ist.

Die zweite Eingangsgröße α_{H} ist ein zweiter Drehwinkel, welcher einem Verschwenkwinkel β und somit dem Betätigungshub des Bremsdrehhebels 2 entspricht.

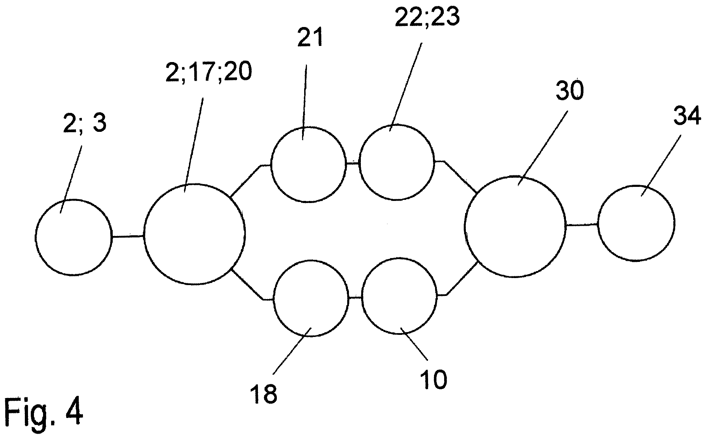

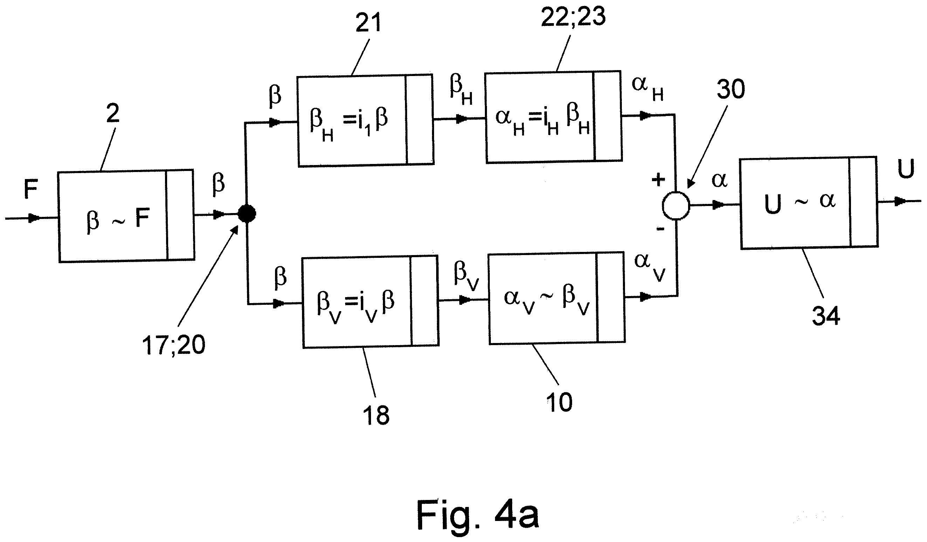

Dies wird weiter unten im Zusammenhang mit Fig. 4 und 4a noch weiter beschrieben.

Die erste Eingangsgröße α_{V}, d.h. der erste Drehwinkel, wird von der Mitnehmerwelle 14 in das Überlagerungsgetriebe 30 eingeleitet. Die zweite Eingangsgröße α_{H}, d.h. der zweite Drehwinkel, wird über ein Zwischengetriebe 21, 22, 23 in das Überlagerungsgetriebe 30 eingeleitet. Das Zwischengetriebe 21, 22, 23 wird nun im Zusammenhang mit Fig. 1, 2 und 3 näher beschrieben.

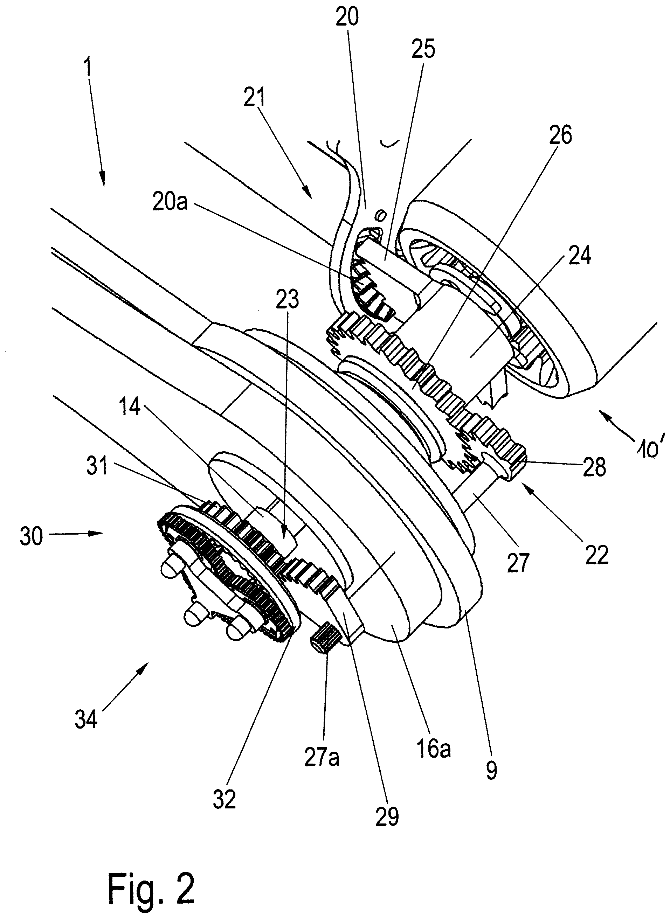

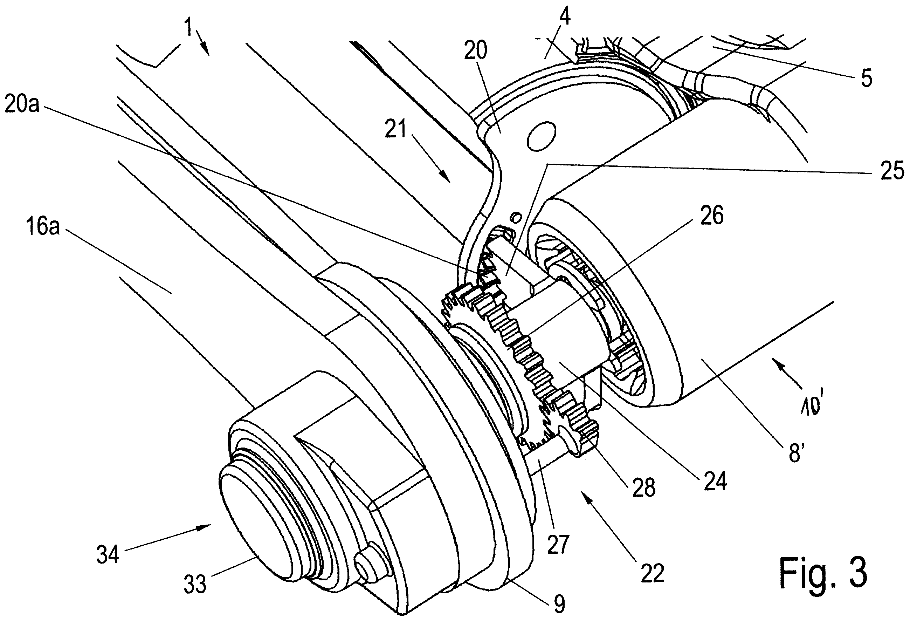

Dazu zeigen Fig. 2 und 3 vergrößerte Darstellungen der erfindungsgemäßen Sensoreinrichtung 34 nach Fig. 1.

Das Zwischengetriebe 21, 22, 23 umfasst einen Hebelwinkelgeber 21, eine erste Getriebestufe 22 und eine zweite Getriebestufe 23.

Der Hebelwinkelgeber 21 weist einen Hebelwinkelantriebsabschnitt 20 mit einem Hebelwinkelantriebselement 20a auf. Der Hebelwinkelantriebsabschnitt 20 ist hier ähnlich wie der Nachstellerantriebsabschnitt 17 des Bremsdrehhebels 2 auch scheibenförmig oder scheibensegmentförmig ausgebildet und an dem anderen Ende der Lagerwalze 4, welches zu der Spindeleinheit 6' mit der Mitnehmerwelle 14 weist, am Bremsdrehhebel 2 drehfest angebracht.

Das Hebelwinkelantriebselement 20a ist als ein Zahnsegmentabschnitt eines Kronenrads ausgeführt, wobei seine Zähne in Richtung der Längsachse der Lagerwelle 4 weisen. Das Hebelwinkelantriebselement 20a kann einstückig mit dem Hebelwinkelantriebsabschnitt 20 ausgebildet sein. Es steht mit einem Zwischenantriebsrad 25 in Eingriff.

Das Zwischenantriebsrad 25 ist an einem Ende einer Zwischenwelle 24, das zum Druckstück 7' weist, drehfest angebracht. Die Zwischenwelle 24 ist koaxial auf der Mitnehmerwelle 14 und relativ zu dieser verdrehbar zwischen der Halterung 9 und dem Druckstempel 8' angeordnet. Das andere Ende der Zwischenwelle 24 ist mit einem Zwischenabtriebsrad 26 versehen. Das Zwischenantriebsrad 25 ist hier im Gegensatz zu dem Zwischenabtriebsrad 26 als Zahnsegment ausgebildet und mit dem Zwischenabtriebsrad 26 über die Zwischenwelle 24 drehfest verbunden.

Das Zwischenabtriebsrad 26 bildet mit einem Übertragungsantriebsrad 28 die erste Getriebestufe 22. Das Übertragungsantriebsrad 28 ist als Zahnsegment ausgeführt und an einem zum Druckstück 7' weisenden Ende einer Übertragungswelle 27 drehfest angebracht. Die Übertragungswelle 27 ist in einem Abstand parallel zur Mitnehmerwelle 12 angeordnet und erstreckt sich parallel zu dieser durch die Halterung 9. Ein Abtriebsende 27a der Übertragungswelle 27 ist mit einem Übertragungsabtriebsrad 29, das als Zahnsegment ausgebildet ist, versehen. Das Abtriebsende 27a weist hier eine Art Kerbverzahnung auf, auf welche das Übertragungsabtriebsrad 29 bei Montage aufgedrückt wird, um eine drehfeste Verbindung mit der Übertragungswelle 27 zu bilden. Das Übertragungsabtriebsrad 29 steht mit einem Eingangsrad 31 des Überlagerungsgetriebes 30 in Eingriff, wobei das Übertragungsabtriebsrad 29 und das Eingangsrad 31 die zweite Getriebestufe 23 bilden.

Das Eingangsrad 31 des Überlagerungsgetriebes 30 ist mit einem Umlaufrad 32 des hier als Planetengetriebe ausgeführten Überlagerungsgetriebes 30 verbunden, koaxial auf der Mitnehmerwelle 14 angeordnet und gegenüber dieser verdrehbar. Die Mitnehmerwelle 14 ist hier z.B. mit dem nicht näher bezeichneten Sonnenrad des Planetengetriebes gekoppelt. Der ebenfalls nicht näher bezeichnete aber deutlich zu erkennende Planetenträger des Überlagerungsgetriebes 30 ist mit einem Winkelsensor der Sensoreinrichtung 34 gekoppelt, der in diesem Ausführungsbeispiel ein Potentiometer ist. Das Potentiometer ist in einem Sensorgehäuse 33 untergebracht (Fig. 3), welches auf einer Abdeckung 16a des Synchronmittels 16 aufgebracht ist. Das Sensorgehäuse 33 kann aber auch separat von der Abdeckung 16a auf der Halterung 9 befestigt sein.

Die Sensoreinrichtung 34 erfasst somit sowohl den Verschleiß von Bremsbelägen und Bremsscheibe als auch den Betätigungshub des Bremsdrehhebels 2. Hierzu zeigt Fig. 4 ein schematisches Sinnbild eines Kraftflusses durch verschiedene Funktionseinheiten der Scheibenbremse 1. In Fig. 4 ist der Kraftfluss zur Erzeugung der Drehwinkel dargestellt, die jeweils die Eingangsgrößen α_{H} und α_{V} für die Sensoreinrichtung 34 bilden. Fig. 4a zeigt dazu einen zugehörigen beispielhaften Signalflussplan.

Der Hebelarm 3 des Bremsdrehhebels 2 wird z.B. durch einen Kolben bzw. Stößel eines Druckluftzylinders bei Zuspannung der Scheibenbremse 1 betätigt. Diese Betätigungskraft wird auf eine Spreizmechanik, in diesem Fall der Bremsdrehhebel 2, übertragen. An beiden Enden der Lagerwalze 4, nämlich am Nachstellerantriebsabschnitt 17 und am Hebelwinkelantriebsabschnitt 20 verzweigt der Kraftfluss in zwei parallele Kraftflüsse.

Der in der Fig. 4 unten dargestellte Kraftfluss ermöglicht eine Übertragung der Schwenkbewegung des Bremsdrehhebels 2 über die Nachstellerantriebskopplung 18 auf den Verschleißnachsteller 10. Diese Kraftübertragung dient zum Antrieb des Verschleißnachstellers 10 und der damit synchron gekoppelten Mitnehmerwelle 14 und muss eine dementsprechende ausreichende Stärke besitzen, um z.B. Reibungskräfte von Rutschkupplungen des Verschleißnachstellers 10 und des Synchronmittels 16 zu überwinden. Wird aufgrund von Verschleiß eine Nachstellung vorgenommen, wird diese als Drehwinkel der mit der Nachstellerwelle 12 synchron gekoppelten Mitnehmerwelle 14 und somit als erste Eingangsgröße α_{V} auf das Überlagerungsgetriebe 30 geleitet.

Parallel dazu ist in Fig. 4 darüber der Kraftfluss gezeigt, welcher von der Schwenkbewegung des Bremsdrehhebels 2 über den Hebelwinkelgeber 21 auf die Getriebestufen 22, 23 übertragen wird. Dieser Kraftfluss muss nur dazu in der Lage sein, die inneren Reibungswiderstände des Zwischengetriebes 21, 22, 23 zu überwinden und somit den Schwenkwinkel β des Bremsdrehhebels 2 als zweite Eingangsgröße α_{H} an das Überlagerungsgetriebe 30 weiterzugeben.

In dem Überlagerungsgetriebe 30 werden die Bewegungen, d.h. Winkel, der Nachstellerwelle 12 bzw. der Mitnehmerwelle 14 und des Zwischengetriebes 21, 22, 23, d.h. des Bremsdrehhebels 2 als Eingangsgrößen α_{V}, α_{H} zusammengeführt bzw. überlagert. Die Übersetzungen der Getriebestufen 22, 23 und des Überlagerungsgetriebes 30 sind so ausgelegt, dass Winkelbewegungen der zwei Eingangsgrößen α_{V}, α_{H} eindeutig voneinander trennbar bzw. unterscheidbar sind.

Auf diese Weise wird das durch das Überlagerungsgetriebe 30 angetriebene Potentiometer der Sensoreinrichtung 34 von beiden Eingangsgrößen α_{V}, α_{H} so verstellt, dass es seinen elektrischen Widerstand zur eindeutigen Unterscheidung der beiden Eingangsgrößen α_{V}, α_{H} entsprechend verändert. In einer nicht dargestellten Auswerteschaltung ist das Potentiometer in eine Widerstandsmessschaltung eingebunden, welche entsprechenden Spannungen ausgibt, was unten noch im Detail erläutert wird.

Der in Fig. 4a gezeigte beispielhafte Signalflussplan dient zur Verdeutlichung der Erzeugung der Eingangsgrößen α_{V}, α_{H} in der Scheibenbremse 1. Als Eingangssignal wird eine Zuspannkraft F auf den Bremshebel 2 eingeleitet, welche daraus den Hebelschwenkwinkel β erzeugt. Dieser wird in einer Verzweigungsstelle, welche durch den Nachstellerantriebsabschnitt 17 und den Hebelwinkelantriebsabschnitt 20 realisiert ist, in zwei Signalflüsse wie die parallelen Kraftflüsse aus Fig. 4 aufgeteilt.

In dem unteren Signalflusspfad wird der Hebelschwenkwinkel β durch die Nachstellerantriebskopplung 18 mit einem vorher festlegbaren Übersetzungsverhältnis i_{V} beaufschlagt, und es wird ein Zwischenwinkel β_{V} gebildet, der durch den Verschleißnachsteller 10 bei vorhandenem Verschleiß in die erste Eingangsgröße α_{V} umgesetzt wird.

Parallel dazu wird der Hebelschwenkwinkel β in dem oberen Signalflusspfad durch den Hebelwinkelgeber 21 mit einem vorher festlegbaren Übersetzungsverhältnis i₁ beaufschlagt, wobei ein Zwischenwinkel β_{V} gebildet wird, der durch die beiden Getriebestufen 22, 23 mit einem ebenfalls vorher festlegbaren Übersetzungsverhältnis i_{H} in die zweite Eingangsgröße α_{H} umgesetzt wird.

Das Überlagerungsgetriebe 30 weist hier die Funktion einer Verknüpfungsstelle, z.B. eine Subtraktionsstelle oder Additionsstelle, für die beiden Eingangsgrößen α_{V} und α_{V} auf. Als Ausgangsgröße der Verknüpfungsstelle wird ein Drehwinkel α des Potentiometers als Differenz der beiden Eingangsgrößen α_{V} und α_{V} gebildet. Die Sensoreinrichtung 34 erzeugt mit dem Potentiometer einschließlich einer zugehörigen Spannungsversorgung aus dem Drehwinkel α eine jeweilige zugehörige Spannung U, die dann in einer Auswerteschaltung (nicht gezeigt) ausgewertet wird.

Aus Fig. 4a ist außerdem ersichtlich, dass durch einfache Variationen der unterschiedlichen, vorher festlegbaren Übersetzungsverhältnisse i₁, i_{V}, i_{H} eine Anpassung der Eingangsgrößen α_{V} und α_{V} für eine ausreichende Unterscheidung und getrennte Darstellbarkeit möglich ist.

So ist die Sensoreinrichtung 34 zur Erfassung von zwei unterschiedlichen Eingangsgrößen α_{V}, α_{H} ausgebildet und gibt eine Sensorausgangsspannung U, welche auch als Sensorausgangssignal bezeichnet werden kann, aus, welche eine Linearkombination der zwei unterschiedlichen Eingangsgrößen α_{V}, α_{H} entspricht. Die Koeffizienten der Linearkombination sind dabei zeitlich nicht konstant, unstetig veränderbar und vom Betriebszustand des als Planetengetriebe ausgebildeten Überlagerungsgetriebes 30 abhängig. Es sind nur eine Sensoreinrichtung 34 und nur eine Anschlussleitung für die Sensoreinrichtung 34 und für die beiden Eingangsgrößen α_{V}, α_{H} erforderlich.

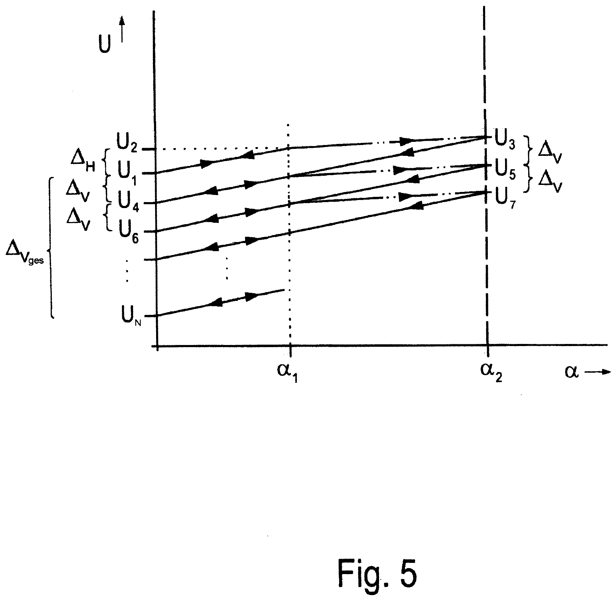

In Fig. 5 ist eine vereinfachte schematische grafische Darstellung einer beispielhaften Sensorausgangsspannung U in Abhängigkeit von dem Drehwinkel α des Potentiometers gezeigt.

Es wird von dem Fall ausgegangen, in welchem noch kein Verschleiß vorliegt, z.B. bei neuen Bremsbelägen. Hierbei steht das Überlagerungsgetriebe 30 z.B. in einer Anfangsstellung. Es kann sowohl im Uhrzeigersinn als auch im Gegenuhrzeigersinn verdreht werden, je nach vorheriger Auslegung und Einstellung. In einer solchen Anfangsstellung liefert die Sensoreinrichtung 34 mit einer Auswerteschaltung mit dem Potentiometer eine Ausgangsspannung U₁.

Bei einer Zuspannung der Scheibenbremse 1 durch Betätigung des Bremsdrehhebels 2 wird mittels des Zwischengetriebes 21, 22, 23 die zweite Eingangsgröße α_{H} auf das Überlagerungsgetriebe 30 geleitet und das Potentiometer der Sensoreinrichtung 34 in diesem Beispiel derart um den Drehwinkel α verdreht, dass sich die Ausgangsspannung U von dem Ausgangswert U₁ auf einen Spannungswert U₂ bei Erreichen des Reibepunkts in einem Drehwinkel α₁ verändert, in diesem Fall erhöht. Dies ist in dem Graph ausgehend von U₁ mit einem Pfeil nach rechts oben in Fig. 5 angedeutet. Der Verschwenkwinkel des Bremsdrehhebels 2 entspricht dem jeweiligen aktuellen Lüftspiel der Scheibenbremse 1. Ein Soll-Lüftspiel kann beispielsweise auch als ein Spannungswert als Referenz festgelegt werden. Ein Vergleich der Sensorausgangsspannung U₂ bei zugespannter Scheibenbremse 1 mit diesem Referenzspannungswert (hier z.B. U₁) kann in der Auswerteschaltung Abweichungen des Lüftspiels sowohl zu höheren Werten durch Verschleiß als auch zu kleineren Werten, z.B. aufgrund von Temperaturerhöhung, erfassen.

Da noch kein Verschleiß vorliegt, wird auch der Verschleißnachsteller 10 noch nicht aktiviert. Daher verschwenkt der Bremsdrehhebel 2 beim Lösen der Scheibenbremse 1 in diesem Anfangsfall wieder in seine Ausgangslage zurück. Dies ist durch den nach unten gerichteten Pfeil angedeutet. Die Ausgangsspannung U bei nun wieder gelöster Bremse beträgt U₁ wie vor dem Zuspannen. Der Bremsdrehhebelhub bzw. Hebelschwenkwinkel β ist hier die Spannungsdifferenz Δ_{H} = U₂ - U₁. Der zum Hub des Bremsdrehhebels 2 gehörige Spannungshub als Spannungsdifferenz Δ_{H} = U₂ - U₁ kann z.B. im Bereich von 0,5 V ... 1,5 V liegen.

Da U₁ wieder als Ausgangssignal der Sensoreinrichtung 34 vorhanden ist, kann eine Auswerteschaltung aufgrund des Spannungshubs von U₁ nach U₂ und wieder zurück nach U₁ daraus schließen, das kein Verschleiß aufgetreten ist. Wenn der nun erreichte Spannungswert in diesem Ausführungsbeispiel größer als U₁ ist, kann die Auswerteschaltung auf ein verkleinertes Lüftspiel schließen. Ist der nun erreichte Spannungswert in diesem Ausführungsbeispiel kleiner als U₁, so ist ein Verschleiß aufgetreten, der aber noch nicht zu einer Aktivierung des Verschleißnachstellers 10 geführt hat.

Tritt nun ein größerer Verschleiß der Bremsbeläge auf, z.B. nach mehreren Bremsungen, so wird bei einer Zuspannung des Bremsdrehhebels 2 auch die Nachstellwelle 12 durch den Verschleißnachsteller 10 und über das Synchronmittel 16 die Mitnehmerwelle 14 zur Nachstellung des Verschleißes verdreht. Diese Drehbewegung wird als die erste Eingangsgröße α_{V} zusätzlich zur zweiten Eingangsgröße α_{H} der Schwenkbewegung des Bremsdrehhebels 2 auf das Überlagerungsgetriebe 30 geleitet, wobei dieses eine Überlagerung der beiden Eingangsgrößen α_{V}, α_{H} vornimmt. Dies erfolgt in dem gezeigten Beispiel in Fig. 5 dergestalt, dass die erste Eingangsgröße α_{V} von der zweiten Eingangsgröße α_{H} abgezogen wird. Selbstverständlich ist auch eine Summierung der Eingangsgrößen α_{V}, α_{H} möglich.

Dabei wird z.B. wieder von der Ausgangsspannung U₁ ausgegangen. Der Bremsdrehhebel 2 verschwenkt wieder bis zum Reibepunkt im Drehwinkel α₁ und bei weiterem Zuspannen wird die Nachstellwelle 12 des Verschleißnachstellers 10 verdreht, um das Soll-Lüftspiel automatisch wieder (in bestimmten Grenzen) einzustellen. Die erste Eingangsgröße α_{V} wird nun von der zweiten Eingangsgröße α_{H} durch das Überlagerungsgetriebe 30 abgezogen, so dass eine Steigung des resultierenden Graphs kleiner wird, was durch eine Strich-Doppelpunkt-Linie in Fig. 5 verdeutlicht ist. Wenn die Nachstellbewegung der Nachstellwelle 12 des Verschleißnachstellers 10 beendet ist, liegt die Ausgangsspannung U der Sensoreinrichtung 34 auf einem Wert U₃.

Beim Lösen der Bremse verläuft der Graph bei der Zurückschwenkung des Bremsdrehhebels 2 von U₃ nach einem neuen Ausgangsspannungswert U₄, der hier kleiner als U₁ ist. Die Auswerteschaltung kann aus diesen Werten den Verschleißwert als Differenz Δ_{V} = U₄ - U₁ ermitteln.

Sobald wieder eine Nachstellung erfolgt, verschiebt sich die Sensorausgangsspannung U beim nächsten Durchgang von U₄ auf U₆.

Ein Gesamtverschleiß als Differenz Δ_{Vges} von aufeinanderfolgenden Ausgangsspannungen kann z.B. direkt als eine Sensorausgangsspannung U erfasst werden. U_{N} erzeugt. Dadurch ist es möglich, bei Erreichen eines Grenzverschleißwertes z.B. bei einer Sensorausgangsspannung U_{N}, dass die Auswerteschaltung dies ermittelt und einen fälligen Belagwechsel der Scheibenbremse in geeigneter Weise, z.B. optisch/akustisch meldet.

Die Auswerteschaltung ist mit einem Bremssteuergerät verbunden. Sie kann auch Bestandteil des Bremssteuergerätes sein. Dadurch kann der exakte Zeitpunkt eines Bremsvorgangs durch Signale des Bremssteuergerätes von der Auswerteschaltung ermittelt werden, um z.B. die Sensorausgangsspannungswerte der Sensoreinrichtung 34 bestimmten Ereignissen zuzuordnen.

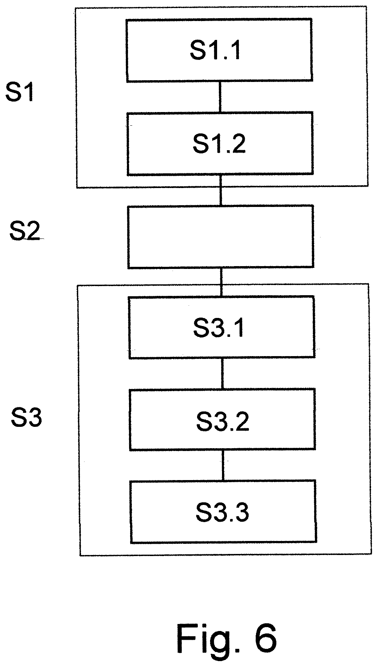

Fig. 6 stellt ein beispielhaftes Flussdiagramm eines erfindungsgemäßen Verfahrens zum Ermitteln von Verschleiß und Betätigungshub der Scheibenbremse 1 dar.

In einem ersten Verfahrensschritt S1 werden der Verschleißwert und der Betätigungshubwert erfasst. Dabei wird in einem Teilschritt S1.1 der Verschleißwert als Drehwinkel der Mitnehmerwelle 14 als eine erste Eingangsgröße α_{V} gebildet. In einem weiteren Teilschritt S1.2 wird der Betätigungshubwert als ein Drehwinkel als eine zweite Eingangsgröße α_{H} mittels des Zwischengetriebes 21, 22, 23 gebildet.

In einem zweiten Verfahrensschritt werden beide Eingangsgrößen α_{V}, α_{H} mechanisch in einem Überlagerungsgetriebe 30 überlagert und ein Drehwinkel α ausgegeben.

In einem dritten Verfahrensschritt wird anhand des Drehwinkels α eine Sensorausgangsspannung U erzeugt, mit welcher sowohl der Verschleißwert als auch der Betätigungshubwert getrennt ermittelt werden. Hierbei wird in einem Teilschritt S3.1 eine Spannungsdifferenz Δ_{V} = U₄ - U₁ als Verschleißwert gebildet. In einem weiteren Teilschritt S3.2 wird der Betätigungshubwert als eine Spannungsdifferenz Δ_{H} = U₂ - U₁ ermittelt. In einem noch weiteren Teilschritt S3.3 wird ein Gesamtverschleiß als Spannungswert U_{N} erzeugt.

Varianten des Verfahrens werden unten noch ausführlich beschrieben.

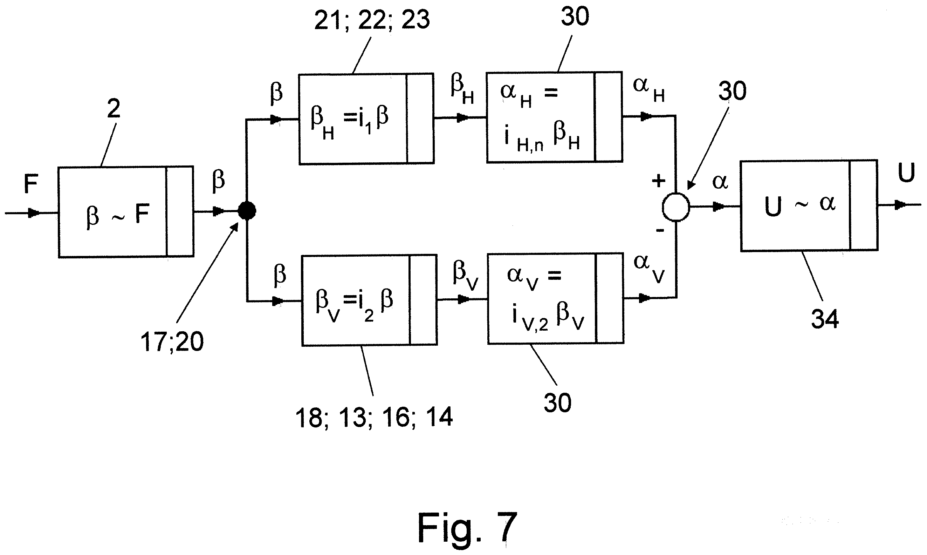

In Fig. 7 ist ein weiterer beispielhafter Signalflussplan ähnlich Fig. 4a gezeigt.

Der obere Kraftpfad, mit dem Index "H", stellt den Betätigungshub dar und der untere, mit dem Index "V", den Verschleißweg.

Mit der ersten Übersetzungsstufe mit dem Übersetzungsverhältnis i₁ im oberen Kraftpfad ist der gesamte Antrieb vom Bremsdrehhebel 2 bis zum Überlagerungsgetriebe 30 gemeint. Die Übersetzung kann mit einem Abtrieb oder mit beliebig vielen Getriebestufen realisiert werden. Hier wird sie mit den Bauteilen 21,22,23 realisiert und mit jeder Bauteilschnittstelle ist eine Übersetzung ausgeführt. Das Produkt aller dieser Übersetzungen ergibt das Übersetzungsverhältnis i₁.

Mit der ersten Übersetzungsstufe mit dem Übersetzungsverhältnis i₂ im unteren Kraftpfad ist ebenso der gesamte Antrieb vom Bremsdrehhebel 2 bis zum Überlagerungsgetriebe 30 gemeint. In diesem Fall wird diese Übersetzungsstufe durch die Bauteile 18, 13, 16, 14 realisiert. Hierbei ist nur ein Übersetzungsverhältnis ungleich 1 mit dem Nachstellerantrieb 18 verbunden. Im Gegensatz zum Antrieb, dem Hebelwinkelgeber 21, im oberen Kraftpfad, wird der Verschleißnachsteller 10 nicht kontinuierlich angetrieben. Bis der Bremsdrehhebel 2 das konstruktive Lüftspiel, das hier mit β_{LS} bezeichnet ist, überwunden hat, wird der Verschleißnachsteller 10 nicht angetrieben. Ab dem Reibepunkt, der hier β_{R} genannt ist, kommt die Nachstellerwelle 12 durch die Axialkraft im Gewinde der zugehörigen Spindeleinheit 6, 6' zum Stillstand. Dabei ist zu beachten:
β_{V} = i₂ α_{V}, wobei i₂ = 0, wenn β < β_{LS} vorliegt.

Mit den zweiten Übersetzungsstufen im unteren und oberen Kraftpfad sind die aus dem Zähnezahlverhältnis des Überlagerungsgetriebes 30 resultierenden Übersetzungen gemeint.
α_{H} = i_{H,n} β_{H}

Hier ergeben sich abhängig davon, ob sich die Nachstellwelle 12 dreht, zwei Betriebszustände und somit zwei unterschiedliche Übersetzungen:
α_{H} = i_{H,1} β_{H}, wenn β_{V} = 0, und
α_{H} = i_{H,2} β_{H}, wenn β_{V} ≠ 0

Es ist grundsätzlich auch möglich einen autark wirkenden Nachsteller zu verwenden. Somit wäre βᵥ unabhängig, z.B. von einem elektrischen Antrieb angetrieben.

Außerdem werden diese Übersetzungen so ausgewählt, dass eine Gesamtverdrehung der Welle des Potentiometers der Sensoreinrichtung 34 über den gesamten Verschleißweg 360° oder beispielsweise 270° nicht überschreitet. Im Fall der 270° Verdrehung ist es möglich, handelsübliche kostengünstige Potentiometer zu verwenden. Natürlich sind auch Mehrgangpotentiometer möglich.

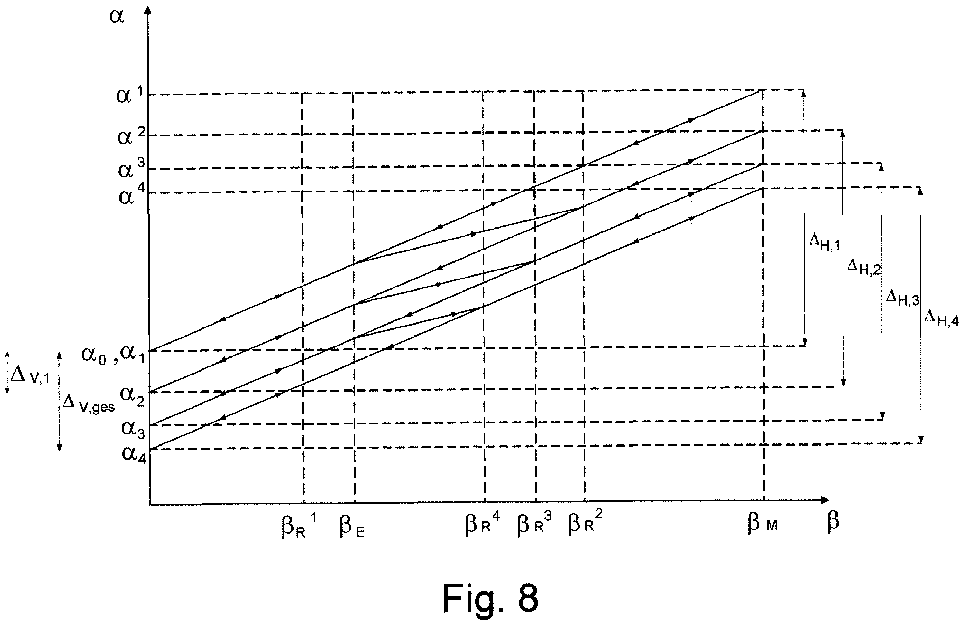

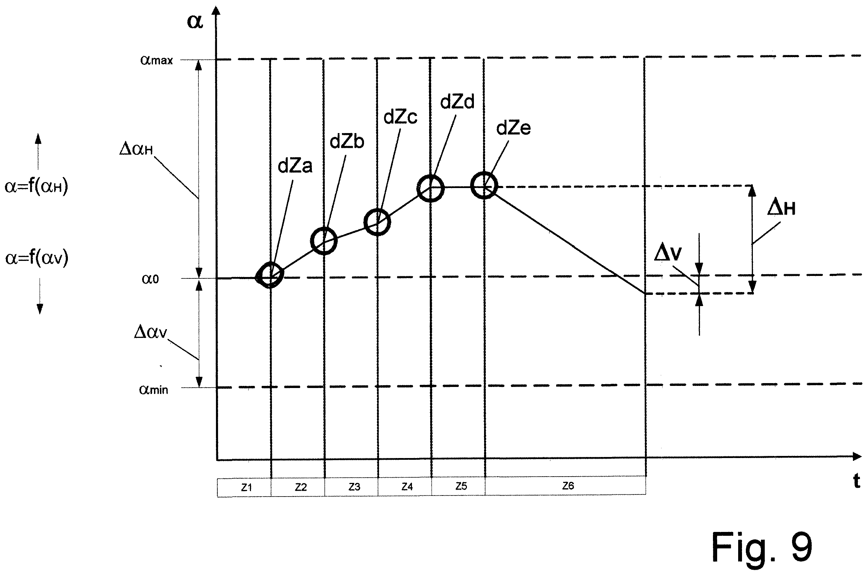

Zum Erhalt einer erwünschten Charakteristik einer speziellen Kurve, wie sie z.B. in den Figuren 8 und 9 dargestellt ist, müssen die Übersetzungen i₁, i₂, i_{H,1}, i_{H,2}, i_{V,2} aufeinander abgestimmt werden.

Fig. 8 zeigt eine schematische grafische Darstellung eines Drehwinkels α mit Erfassung von zwei Eingangsgrößen.

In Fig. 8 sind folgende Bezeichnungen angegeben:
- α: Sensorwinkel (∼Sensorspannung) bzw. Drehwinkel
- β: Betätigungshub (Hebelschwenkwinkel)
- α₀: Anfangssensorwinkel
- αₙ: Sensorwinkel nach Bremsung n
- αⁿ: Maximalwert des Sensorwinkels während Bremsung n
- β_{E}: Hebelschwenkwinkel bei Eingriff vom Hebelabtrieb (Nachstellerantriebsabschnitt 17) in Nachstellerantriebselement 19 (dies entspricht dem konstruktiven Lüftspiel)
- β_{R}ⁿ: Hebelschwenkwinkel beim Reibepunkt für Bremsung n
- β_{M}: Hebelschwenkwinkel im Umkehrpunkt
- Δ_{H,n}: Differenzwert infolge Betätigungshub bei Bremsung n
- Δ_{V,n}: Differenzwert infolge Verschleißnachstellung bei Bremsung n

In Fig. 8 ist eine schematische Darstellung der Verdrehung der Sensorabtastwelle mit dem Drehwinkel α über den Betätigungswinkel β bei vier aufeinander folgenden Bremsungen dargestellt. Die erste Bremsung erfolgt mit einem Lüftspiel, bei welchem kein Nachstellbedarf vorhanden ist (β_{R}¹ < β_{E}). Die drei darauf folgenden Bremsungen haben einen immer kleiner werdenden Nachstellbedarf. Somit verschiebt sich der Reibepunkt immer näher an den Punkt, in welchem der Hebelabtrieb der Nachstellerantriebskopplung 18 (siehe Fig. 1) in den Nachstellerantriebsabschnitt 17 des Verschleißnachstellers 10 greift. Für eine einfache graphische Darstellung erfolgen die Bremsungen mit dem gleichen maximalen Hub. Man kann sich hier entweder einen Anschlag oder einen angepassten Betätigungsdruck vorstellen.

Der Betätigungshub ergibt sich aus der Differenz zwischen dem maximalen Drehwinkel α während der Bremsung und dem Drehwinkel α nach der Bremsung. Es ist erkennbar dass die vier Bremsungen 1-4 alle mit dem gleichen Betätigungshub erfolgen (Δ_{H,1} = α¹ - α₁ = Δ_{H,2} = α² - α₂ = Δ_{H,3} = α³ - α₃ = Δ_{H,4} = α⁴ - α₄). Um den Betätigungshub zu erfassen, muss somit irgendwann vor dem Anfang einer Bremsung eine Maximalwertauswertung ausgelöst werden. Die Maximalwertauswertung endet mit oder nach der Rückkehr des Bremsdrehhebels 2 in die Anfangsposition, in der auch der Wert αₙ ausgewertet wird.

Der Verschleißweg Δ_{V,1} ergibt sich aus der Differenz zwischen dem Drehwinkel α vor und nach der Bremsung. Der Summenverschleißweg Δ_{V,ges} ergibt sich aus der Differenz zwischen dem aktuellen und dem anfänglichen Drehwinkel a. Der Verschleißweg Δ_{V,1} bzw. Summenverschleißweg Δ_{V,ges} kann somit nur im unbetätigten Zustand ausgewertet werden.

Fig. 9 stellt eine schematische grafische Darstellung des Drehwinkels α über der Zeit t dar.

Es ist der Verlauf des Drehwinkels α im Falle einer Verschleißnachstellung gezeigt.

An der Ordinate sind folgenden Bezeichnungen (Beginn unten) angegeben.
- αₘᵢₙ: Minimaler Drehwinkel bzw. Sensorwinkel
- Δα_{V}: Winkelintervall der Eingangsgröße Verschleiß zugeordnet
- α₀: Drehwinkel bzw. Sensorwinkel im Ausgangszustand
- Δα_{H}: Winkelintervall der Eingangsgröße Betätigungshub/Hebelschwenkwinkel zugeordnet
- αₘₐₓ: Maximaler Drehwinkel bzw. Sensorwinkel
- α=f(α_{V}): Drehwinkel infolge Eingangsgröße Verschleiß
- α=f(α_{H}): Drehwinkel infolge Eingangsgröße Betätigungshub/Hebelschwenkwinkel

Die Abszisse ist in Zustände Z1 bis Z5 aufgeteilt.

In dem ersten Zustand Z1 steht der Drehwinkel α im Ausgangszustand α₀. Die Bremse ist dabei unbetätigt. Wird nun die Bremse zugespannt, erfolgt ein Wechsel aus dem Zustand Z1 in den Zustand Z2. Dies ist durch eine Zustandsänderung dZa gekennzeichnet, welche einen deutlichen Knick in der Kurve des Drehwinkels α nach oben in positiver Richtung bildet.

Die Eingangsgröße Betätigungshub verändert sich zu größeren Werten, d.h. der Bremsdrehhebel 2 verschwenkt durch das konstruktive Lüftspiel (wie oben bereits erwähnt), bis der Zustand Z3 erreicht wird. Diese Zustandsänderung dZb ist wiederum durch einen Knick der Kurve gekennzeichnet.

Im Zustand Z3 erfolgt eine Nachstellung durch den Verschleißnachsteller 10. Dies bedeutet, dass sich die zweite Eingangsgröße Verschleiß ändert. Diese Änderung erfolgt wie oben beschrieben gegenläufig zu der ersten Eingangsgröße in negativer Richtung, wobei die Steigung der Kurve geringer wird.

Beim Erreichen des Reibepunkts erfolgt die Zustandsänderung dZc im Zustand Z4. Eine Verschleißnachstellung erfolgt nicht mehr, die zweite Eingangsgröße Verschleiß ist wieder Null geworden, aber die erste Eingangsgröße ändert sich weiter, da der Bremsdrehhebel 2 weiter bis in die Endstellung bei der Zustandsänderung dZd in den Zustand Z5 verschwenkt und schließlich still steht.

Im Zustand Z6 nach der Zustandsänderung dZe, die wieder einen Knick in der Kurve bildet, erfolgt ein Rückhub bzw. Zurückschwenken des Bremsdrehhebels 2 zum Lösen der Bremse. Die Kurve verläuft nun in negativer Richtung und unterschreitet den Drehwinkel α₀ bzw. Sensorwinkel im Ausgangszustand um den Betrag des Verschleißes Δ_{V}. Der Hebelschwenkwinkel β ist als Differenz Δ_{H} zwischen dem größten Wert des Drehwinkels α im Zustand Z5 und dem nun erreichten Endwinkel am Ende des Zustands Z6 erfasst. Der Verschleiß Δ_{V} ist die Differenz zwischen dem Drehwinkel α₀ bzw. Sensorwinkel im Ausgangszustand und dem Wert des Drehwinkels α als Endwinkel am Ende des Zustands Z6.

Der Drehwinkel α der Sensoreinrichtung 34 betätigt das jeweilige Sensorelement, z.B. ein Potentiometer, so dass die Sensoreinrichtung 34 ein entsprechendes Ausgangssignal erzeugt, z.B. eine elektrische Spannung. Die Auswertung eines solchen Ausgangssignals anhand der oben erläuterten Zusammenhänge ermöglicht die Erfassung von Verschleiß und Betätigungshub der Scheibenbremse 1 mit nur einer Sensoreinrichtung 34.

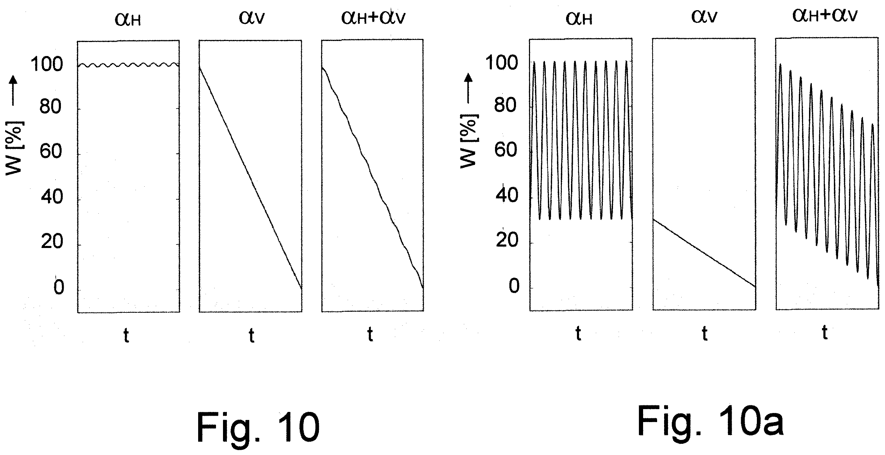

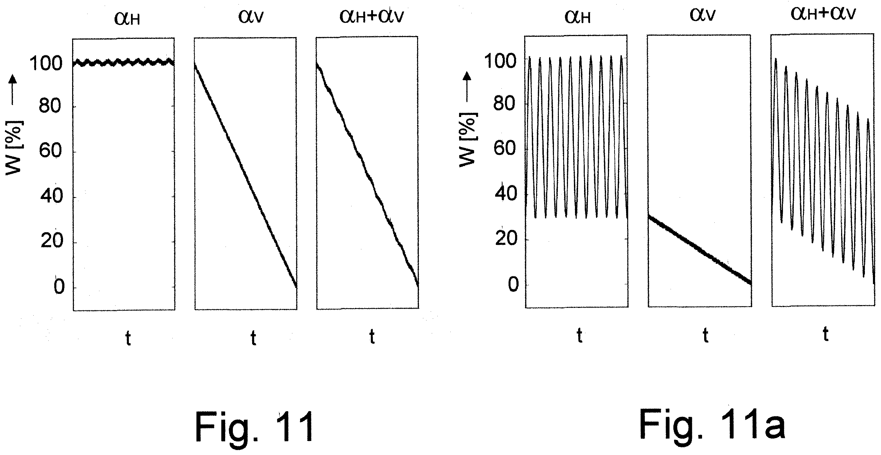

In den Figuren 10 und 10 a sind schematische grafische Darstellungen idealer Sensorwerte W gezeigt. Im Unterschied dazu zeigen die Figuren 11 und 11a schematische grafische Darstellungen von Sensorwerten W, die der Realität, beispielsweise mit einem Rauschen der Messwerte, entsprechen.

Auf den jeweiligen Ordinaten sind die Sensorwerte W in Prozentangaben über der Zeit t aufgetragen.

Der jeweilige linke Kasten stellt in allen Figuren 10-10a und 11-11a die erste Eingangsgröße α_{H} als Betätigungshub dar. Der jeweilige mittlere Kasten zeigt die zweite Eingangsgröße α_{V} als Verschleiß, und in dem jeweiligen rechten Kasten ist die Summe beider Eingangsgrößen α_{H} und α_{V} dargestellt.

Die erste Eingangsgröße α_{H} macht in dem gezeigten Beispiel ca. 1,5 % (das sind ungefähr 0,8 mm Betätigungshub) des Sensorwertes W aus, wobei die zweite Eingangsgröße α_{V} Verschleiß in dem gezeigten Beispiel ca. 98,5 % (das sind etwa 55 mm) des Sensorwertes W ausmacht.

In Fig. 10 ist zu erkennen, dass die erste Eingangsgröße α_{H} nur eine geringe Amplitude zeigt, wobei die zweite Eingangsgröße α_{V} eine deutliche Steigung aufweist. Die Summendarstellung ist geprägt von der zweiten Eingangsgröße α_{V}, die nur eine wesentlich geringe Überlagerung mit der ersten Eingangsgröße α_{H} zeigt.

Mit der oben beschriebenen Sensoreinrichtung 34 mit entsprechend ausgewählten Übersetzungsstufen ist nun eine mechanische Verstärkung der Eingangsgröße mit geringer Amplitude, also der ersten Eingangsgröße α_{H} möglich. Dies ist in Fig. 10a dargestellt. In der Überlagerung von erster und zweiter Eingangsgröße α_{H} und α_{V} ist deutlich erkennbar, dass aus dem gezeigten Summensignal sowohl die Eigenschaften der zweiten Eingangsgröße α_{V} wie auch der ersten Eingangsgröße α_{H} einfach erfassbar sind. Der Messeffekt der ersten Eingangsgröße α_{H} ist dadurch erhöht, wobei elektronische Verstärker hierzu nicht erforderlich sind.

In den Figuren 11 und 11a ist jeder Eingangsgröße ein Rauschen, z.B. mit dem Betrag von 2%, überlagert. Es ist hierbei deutlich in Fig. 11a zu erkennen, dass das Rauschen in der Summenkurve den Messeffekt nicht wesentlich beeinträchtigt.

Das Ausgangssignal der Sensoreinrichtung 34 beinhaltet eine Linearkombination aus einer dem Verschleiß der Scheibenbremse 1 zugeordneten Größe und einer dem Betätigungshub bzw. Hebelschwenkwinkel β des Bremsdrehhebels 2 zugeordneten Größe. Die Koeffizienten sind dabei zeitlich nicht konstant und variieren unstetig in Abhängigkeit vom Betriebszustand des Überlagerungsgetriebes 30, das z.B. ein Planetengetriebe ist.

In einer nicht gezeigten Ausführung kann die Sensoreinrichtung 34 eine Speichereinrichtung zur Speicherung von Werten des Ausgangssignals der Sensoreinrichtung 34 aufweisen. Diese Speichereinrichtung dient auch zur Speicherung des jeweiligen letzten Verschleißwertes beim letzten Auswertezeitpunkt. Die Speichereinrichtung kann für diese Speicherungen einen begrenzten Zeitwert besitzen. So können die gespeicherten Werte bei jeder Auswertung mit den jeweils aktuellen Werten überschrieben werden.

In einer Variante des oben beschriebenen Verfahrens werden in dem ersten Verfahrensschritt S1 der Verschleißwert und der Betätigungshubwert wie oben schon beschrieben erfasst und in dem zweiten Verfahrensschritt S2 mechanisch in dem Überlagerungsgetriebe 30 überlagert, wobei der Drehwinkel α erzeugt und als Ausgangsgröße bereitgestellt wird.

In dem dritten Verfahrensschritt wird anhand des Drehwinkels α ein Sensorausgangssignal erzeugt, mit welchem sowohl der Verschleißwert als auch der Betätigungshubwert getrennt ermittelt werden.

In dieser Variante wird mindestens eine der beiden Eingangsgrößen mechanisch verstärkt. Unter mechanischer Verstärkung ist eine Vergrößerung eines Eingangssignals durch mechanische Faktoren, z.B. mittels eines vorher festlegbaren Übersetzungsverhältnisses von mindestens einer Getriebestufe.

Das Ausgangssignal der Sensoreinrichtung 34 wird kontinuierlich abgetastet und in Form seiner Werte abgespeichert. Dies findet zu einem vorher festlegbaren Zeitpunkt statt, der zwangsläufig von der Vollendung eines Bremsvorgangs abhängig ist, aber nicht zwingend zeitgleich mit diesem erfolgt.

Für die Auswertung sind sowohl die gespeicherten Werte des Ausgangssignals wie auch mindestens ein abgespeicherter Wert, welcher dem Verschleiß bei der letzten Auswertung zugeordnet ist, notwendig.

Als Ergebnis der Auswertung ergeben sich zum Einen der aktuelle Verschleißwert sowie der maximale Betätigungshub bzw. Hebelschwenkwinkel β in einem Auswertefenster.

Die Auswertung erfolgt in einer Auswertevorrichtung, die hier nicht weiter erläutert wird und z.B. in einem Bremssteuergerät angeordnet sein kann.

Die oben beschriebenen Ausführungsbeispiele schränken die Erfindung nicht ein. Sie ist im Rahmen der beigefügten Ansprüche modifizierbar.

Es ist denkbar, dass anstelle eines Potentiometers eine andere Einheit in der Sensoreinrichtung vorgesehen ist, z.B. ein Winkelsensor mit Hall-Elementen.

Ein Spannungs-Ausgangssignal der Sensoreinrichtung 34 kann z.B. so aufgeteilt werden, dass eine bestimmte Spannungsweite von z.B. 0...5 V in einen Bereich von 0,5...1,5 V für den Betätigungshub und einen Bereich von 1,5...4 V für den Verschleiß aufgeteilt ist.

Anstelle der kronenradartigen Verzahnung der Nachstellerantriebskopplung 18 und/oder des Hebelwinkelgebers 21 können auch Kegelradverzahnungen zum Einsatz kommen.

Das Antriebselement kann auch von einer autark wirkenden Nachstellmechanik angetrieben werden.

### Bezugszeichenliste

- 1: Scheibenbremse
- 2: Bremsdrehhebel
- 3: Hebelarm
- 4: Lagerwalze
- 5: Brücke
- 6, 6': Spindeleinheit
- 7, 7': Druckstück
- 8, 8': Druckstempel
- 9: Halterung
- 10: Verschleißnachsteller
- 10': Mitnehmer
- 11: Nachstellantriebsrad
- 12: Nachstellerwelle
- 13: Nachstellersynchronrad
- 14: Mitnehmerwelle
- 15: Mitnehmersynchronrad
- 16: Synchronmittel
- 16a: Abdeckung
- 17: Nachstellerantriebsabschnitt
- 18: Nachstellerantriebskopplung
- 19: Nachstellerantriebselement
- 20: Hebelwinkelantriebsabschnitt
- 20a: Hebelwinkelantriebselement
- 21: Hebelwinkelgeber
- 22: Erste Getriebestufe
- 23: Zweite Getriebestufe
- 24: Zwischenwelle
- 25: Zwischenantriebsrad
- 26: Zwischenabtriebsrad
- 27: Übertragungswelle
- 27a: Abtriebsende
- 28: Übertragungsantriebsrad
- 29: Übertragungsabtriebsrad
- 30: Überlagerungsgetriebe
- 31: Eingangsrad
- 32: Umlaufrad
- 33: Gehäuse
- 34: Sensoreinrichtung
- F: Zuspannkraft
- i₁, i_{H}, i_{V}: Übersetzungsverhältnis
- α: Drehwinkel
- α_{H}, α_{V}: Eingangsgröße
- β: Hebelschwenkwinkel
- β_{H}, β_{V}: Zwischengröße
- Δ_{H}, Δ_{V}: Spannungsdifferenz
- U: Sensorausgangsspannung
- W: Sensorwert

## Patentansprüche

1. Scheibenbremse (1), insbesondere für ein Kraftfahrzeug, mit einer Zuspannvorrichtung mit einer Spreizmechanik, vorzugsweise mit einem Bremsdrehhebel (2), einer Belagverschleißnachstellvorrichtung, welche mindestens einen mechanischen Verschleißnachsteller (10) aufweist, der vorzugsweise in eine Spindeleinheit (6, 6') der Scheibenbremse (1) einsetzbar und mit der Spreizmechanik, vorzugsweise mit dem Bremsdrehhebel (9), gekoppelt ist, einer Verschleißsensoreinrichtung zur Erfassung eines Verschleißwertes und einer Betätigungshub-Sensoreinrichtung zur Erfassung eines Betätigungshubes, wobei die Verschleißsensoreinrichtung und die Betätigungshub-Sensoreinrichtung in einer gemeinsamen Sensoreinrichtung (34) zusammen integriert sind,
wobei die Spreizmechanik, vorzugsweise der Bremsdrehhebel (9), über eine Nachstellwelle (12) des mindestens einen mechanischen Verschleißnachstellers (10) mit der gemeinsamen Sensoreinrichtung (34) und über ein Zwischengetriebe (21, 22, 23), das mindestens zwei Getriebestufen (22, 23) mit einer Übertragungswelle (27) aufweist, mit der gemeinsamen Sensoreinrichtung (34) gekoppelt ist, **dadurch gekennzeichnet, dass** das Zwischengetriebe (21, 22, 23) einen Hebelwinkelgeber (21) mit einem Hebelwinkelantriebsabschnitt (20) mit einem Hebelwinkelantriebselement (20a) und eine Zwischenwelle (24) aufweist, wobei das Hebelwinkelantriebselement (20a) des Hebelwinkelgebers (21) mit der Zwischenwelle (24) über ein Zwischenantriebsrad (25) mit Kronenradverzahnung oder Kegelradverzahnung gekoppelt ist, und wobei ein Zwischenabtriebsrad (26) der Zwischenwelle (24) mit einem Übertragungsantriebsrad (28) der Übertragungswelle (27) eine erste Getriebestufe (22) der mindestens zwei Getriebestufen (22, 23) bildet.

2. Scheibenbremse (1) nach Anspruch 1, aufweisend mindestens zwei Spindeleinheiten (6, 6'), wobei der mindestens eine mechanische Verschleißnachsteller (10) mit einer Mitnehmerwelle (14) über ein Synchronmittel (16) gekoppelt ist, **dadurch gekennzeichnet**, die gemeinsame Sensoreinrichtung (34) auf der Mitnehmerwelle (14) angeordnet ist.

3. Scheibenbremse (1) nach einem der vorhergehenden Ansprüche, **dadurch gekennzeichnet, dass** die gemeinsame Sensoreinrichtung (34) über ein Überlagerungsgetriebe (30) mit der Nachstellwelle (12) des mindestens einen mechanischen Verschleißnachstellers (10) und dem Zwischengetriebe (21, 22, 23) gekoppelt ist.

4. Scheibenbremse (1) nach Anspruch 3, **dadurch gekennzeichnet, dass** das Überlagerungsgetriebe (30) ein Planetengetriebe ist.

5. Scheibenbremse (1) nach Anspruch 4, **dadurch gekennzeichnet, dass** die Spreizmechanik, vorzugsweise der Bremsdrehhebel (9), über das Zwischengetriebe (21, 22, 23) mit der gemeinsamen Sensoreinrichtung (34) mit einem Hohlrad des Planetengetriebes des Überlagerungsgetriebes (30) gekoppelt ist.

6. Scheibenbremse (1) nach einem der Ansprüche 3 bis 5, **dadurch gekennzeichnet, dass** die gemeinsame Sensoreinrichtung (34) einen mit dem Überlagerungsgetriebe (30) verbundenen Winkelsensor aufweist.

7. Scheibenbremse (1) nach Anspruch 6, **dadurch gekennzeichnet, dass** der Winkelsensor ein nach dem Ohm'schen Gesetz oder Piezowiderstandseffekt wirkender, thermischer, optischer, induktiver, galvanomagnetischer, magnetoelastischer, magnetischer, kapazitiver, piezoelektrischer, chemischer oder pyroelektrischer Sensor ist.

8. Scheibenbremse (1) nach einem der Ansprüche 3 bis 7, **dadurch gekennzeichnet, dass** das Zwischengetriebe (21, 22, 23) oder/und das Überlagerungsgetriebe (30) so ausgebildet ist/sind, dass ein Drehwinkel (α) der gemeinsame Sensoreinrichtung (34) über einen gesamten Verschleißweg des Verschleißnachstellers (10) einen maximalen Wert von kleiner gleich 360° aufweist.

9. Scheibenbremse (1) nach einem der vorhergehenden Ansprüche, **dadurch gekennzeichnet, dass** die gemeinsame Sensoreinrichtung (34) zur Ausgabe eines gemeinsamen Ausgangssignals für den erfassten Verschleißwert und den erfassten Betätigungshubwert ausgebildet ist.

10. Scheibenbremse (1) nach Anspruch 9, **dadurch gekennzeichnet, dass** die gemeinsame Sensoreinrichtung (34) zur Ausgabe eines gemeinsamen Spannungssignals für den erfassten Verschleißwert und den erfassten Betätigungshubwert ausgebildet ist.

11. Scheibenbremse (1) nach einem der vorhergehenden Ansprüche, **dadurch gekennzeichnet, dass** die gemeinsame Sensoreinrichtung (34) mit einer Auswerteschaltung verbunden ist, die separat oder/und in einem Bremssteuergerät der Scheibenbremse (1) angeordnet ist.

12. Scheibenbremse (1) nach einem der vorhergehenden Ansprüche, **dadurch gekennzeichnet, dass** die Scheibenbremse (1) druckluftbetätigt ist.

13. Verfahren zum Ermitteln von Verschleiß und Betätigungshub einer Scheibenbremse (1) nach einem der vorherigen Ansprüche, **gekennzeichnet durch** die Verfahrensschritte:
(S1) Erfassen eines Verschleißwertes und eines Betätigungshubwertes und Bilden von zwei Eingangsgrößen (α_{V}, α_{H});
(S2) Überlagern der gebildeten zwei Eingangsgrößen (α_{V}, α_{H}) und Ausgeben eines Drehwinkels (α) für einen Winkelsensor; und
(S3) Ermitteln des Verschleißwertes und des Betätigungshubwertes anhand einer Sensorausgangsspannung (U) des Winkelsensors.

14. Verfahren nach Anspruch 13, **dadurch gekennzeichnet, dass** beim Verfahrensschritt Erfassen eines Verschleißwertes und eines Betätigungshubwertes folgende Teilschritte durchgeführt werden:
(S1.1) Bilden der ersten Eingangsgröße (α_{V}) als Drehwinkel einer Nachstellerwelle (12) oder einer mit der Nachstellerwelle (12) synchron gekoppelten Mitnehmerwelle (14); und
(S1.2) Bilden der zweiten Eingangsgröße (α_{H}) als Drehwinkel eines Zwischengetriebes (21, 22, 23).

15. Verfahren nach Anspruch 14, **dadurch gekennzeichnet, dass** beim Verfahrensschritt Ermitteln des Verschleißwertes und des Betätigungshubwertes folgende Teilschritte durchgeführt werden:
(S3.1) Bilden einer Spannungsdifferenz (Δ_{V}) als Verschleißwert;
(S3.2) Bilden einer Spannungsdifferenz (Δ_{H}) als Betätigungshubwert; und
(S3.3) Bilden eines Spannungswertes (U_{N}) als Gesamtverschleißwert.

16. Verfahren zum Ermitteln von Verschleiß und Betätigungshub einer Scheibenbremse (1) nach einem der Ansprüche 1 bis 12, **gekennzeichnet durch** die Verfahrensschritte:
(S1) Erfassen eines Verschleißwertes und eines Betätigungshubwertes und Bilden von zwei Eingangsgrößen (α_{V}, α_{H});
(S2) Überlagern der gebildeten zwei Eingangsgrößen (α_{V}, α_{H}) und zur Bereitstellen eines Drehwinkels (α) als Ausgabewert für einen Winkelsensor; und
(S3) Ermitteln des Verschleißwertes und des Betätigungshubwertes anhand eines Sensorausgangssignals des Winkelsensors.

17. Verfahren nach Anspruch 16, **dadurch gekennzeichnet, dass** beim Verfahrensschritt Erfassen eines Verschleißwertes und eines Betätigungshubwertes folgende Teilschritte durchgeführt werden:
(S1.1) Bilden der ersten Eingangsgröße (α_{V}) als Drehwinkel einer Nachstellerwelle (12) oder einer mit der Nachstellerwelle (12) synchron gekoppelten Mitnehmerwelle (14); und
(S1.2) Bilden der zweiten Eingangsgröße (α_{H}) als Drehwinkel eines Zwischengetriebes (21, 22, 23).

18. Verfahren nach Anspruch 16 oder 17, **dadurch gekennzeichnet, dass** mindestens eine der beiden Eingangsgrößen (α_{V}, α_{H}) mechanisch verstärkt wird.

19. Verfahren nach einem der Ansprüche 16 bis 18, **dadurch gekennzeichnet, dass** das Sensorausgangssignals des Winkelsensors kontinuierlich abgetastet und in Form seiner Werte abgespeichert wird.

20. Verfahren nach Anspruch 19, **dadurch gekennzeichnet, dass** im Verfahrensschritt (S3) Ermitteln des Verschleißwertes und des Betätigungshubwertes für eine Auswertung sowohl die gespeicherten Werte des Sensorausgangssignals wie auch mindestens ein abgespeicherter Wert, welcher dem Verschleiß bei der letzten Auswertung zugeordnet ist, verwendet werden.

## Claims

1. Disc brake (1), in particular for a motor vehicle, with an application device having a spreading mechanism, preferably with a brake rotation lever (2), a brake-pad wear adjustment device which comprises at least one mechanical wear adjuster (10) which can preferably be incorporated in a spindle unit (6, 6') of the disc brake (1) and is coupled to the spreading mechanism, preferably with the brake rotation lever (9), a wear sensor device for detecting a wear value and an actuation stroke sensor device for detecting an actuation stroke,
wherein the spreading mechanism preferably comprises the brake rotation lever (9), having an adjustment shaft (12) of the at least one mechanical wear adjuster (10) with the common sensor device (34) and with an intermediate transmission (21, 22, 23), which comprises at least two transmission stages (22, 23) with a transfer shaft (27), being coupled to the common sensor device (34), **characterised in that** the intermediate transmission comprises a lever angle emitter (21) with a lever angle drive input section (20) having a lever angle drive input element (20a) and an intermediate shaft (24), wherein the lever angle drive input element (20a) of the lever angle emitter (21) is coupled to the intermediate shaft (24) by way of an intermediate drive wheel (25) with crown gear teeth or bevel gear teeth, and wherein an intermediate drive output wheel (26) of the intermediate shaft (24) forms with a transfer drive input wheel (28) of the transfer shaft (27) a first transmission stage (22) of the at least two transmission stages (22, 23).

2. Disc brake (1) according to Claim 1, comprising at least two spindle units (6, 6'), wherein the at least one mechanical wear adjuster (10) is coupled to a drive shaft (14) by way of synchronizing means (16), **characterised in that** the common sensor device (34) is arranged on the drive shaft (14).

3. Disc brake (1) according to either of the preceding claims, **characterised in that** the common sensor device (34) is coupled via a superposition gear (30) with the adjustment shaft (12) of the at least one mechanical wear adjuster (10) and the intermediate transmission (21, 22, 23).

4. Disc brake (1) according to Claim 3, **characterised in that** the superposition gear (30) is a planetary gearset.

5. Disc brake (1) according to Claim 4, **characterised in that** the spreading mechanism, preferably the brake rotation lever (9), is coupled via the intermediate transmission (21, 22, 23) with the common sensor device (34) with a ring gear of the planetary gearset of the superposition gear (30).

6. Disc brake (1) according to any of Claims 3 to 5, **characterised in that** the common sensor device (34) comprises an angle sensor connected to the superposition gear (30).

7. Disc brake (1) according to Claim 6, **characterised in that** the angle sensor is a thermal, optical, inductive, galvanomagnetic, magneto-elastic, magnetic, capacitative, piezoelectric, chemical or pyroelectric sensor that works by virtue of Ohm's law or the piezo-resistance effect.

8. Disc brake (1) according to any of Claims 3 to 7, **characterised in that** the intermediate transmission (21, 22, 23) and/or the superposition gear (30) is/are designed such that a rotation angle (α) of the common sensor device (34) has a maximum value smaller than or equal to 360° over a full wear path of the wear adjuster (10).

9. Disc brake (1) according to any of the preceding claims, **characterised in that** the common sensor device (34) is designed to emit a common output signal for the wear value detected and the actuation stroke value detected.

10. Disc brake (1) according to Claim 9, **characterised in that** the common sensor device (34) is designed to emit a common voltage signal for the wear value detected and the actuation stroke value detected.

11. Disc brake (1) according to any of the preceding claims, **characterised in that** the common sensor device (34) is connected to an evaluation circuit, which is arranged separately from and/or in a brake control unit of the disc brake (1).

12. Disc brake (1) according to any of the preceding claims, **characterised in that** the disc brake (1) is actuated by compressed air.

13. Method for determining the wear and the actuation stroke of a disc brake (1) according to any of the preceding claims, **characterised by** the process steps:
(S1) Detection of a wear value and an actuation stroke value, and formation of two input magnitudes (α_{V}, α_{H});
(S2) Superposition of the two input magnitudes (α_{V}, α_{H}) formed and output of a rotation angle (α) for an angle sensor; and
(S3) Determination of the wear value and the actuation stroke value with reference to a sensor output voltage (U) of the angle sensor.

14. Method according to Claim 13, **characterised in that** in the process step "Detection of a wear value and an actuation stroke value" the following part-steps are carried out:
(S1.1) The first input value (α_{V}) is formed as the rotation angle of an adjustment shaft (12) or a drive shaft (14) coupled synchronously to the adjustment shaft (12); and
(S1.2) The second input magnitude (α_{H}) is formed as the rotation angle of an intermediate transmission (21, 22, 23).

15. Method according to Claim 14, **characterised in that** in the process step "Determination of the wear value and the actuation stroke value" the following part-steps are carried out:
(S3.1) A voltage difference (Δ_{V}) is formed as the wear value;
(S3.2) A voltage difference (Δ_{H}) is formed as the actuation stroke value; and
(S3.3) A voltage value (U_{N}) is formed as the overall wear value.

16. Method for determining the wear and actuation stroke of a disc brake (1) according to any of Claims 1 to 12,
**characterised by** the process steps:
(S1) Detection of a wear value and an actuation stroke value and formation of two input magnitudes (α_{V}, α_{H});
(S2) Superposing the two input magnitudes (α_{V}, α_{H}) formed to produce a rotation angle (α) as the output value for an angle sensor; and
(S3) Determination of the wear value and the actuation stroke value with reference to a sensor output signal of the angle sensor.

17. Method according to Claim 16, **characterised in that** in the process step "Determination of a wear value and an actuation stroke value" the following part-steps are carried out:
(S1.1) The first input magnitude (α_{V}) is formed as the rotation angle of an adjustment shaft (12) or a drive shaft (14) synchronously coupled to the adjustment shaft (12); and
(S1.2) The second input magnitude (α_{H}) is formed as the rotation angle of an intermediate transmission (21, 22, 23).

18. Method according to Claims 16 or 17, **characterised in that** at least one of the two input magnitudes (α_{V}, α_{H}) is reinforced mechanically.

19. Method according to any of Claims 16 to 18, **characterised in that** the sensor output signal of the angle sensor is read continuously and is stored in the form of its value.

20. Method according to Claim 19, **characterised in that** in the process step (S3) "Determination of the wear value and the actuation stroke value", for an evaluation both the stored values of the sensor output signal and also at least one stored value which is associated with the wear as last evaluated, are used.

## Revendications

1. Frein (1) à disque, notamment pour un véhicule automobile, comprenant un système de serrage ayant un mécanisme d'écartement, en ayant de préférence un levier (2) tournant de frein, un système de rattrapage d'usure de garniture, qui a au moins un rattrapeur (10) mécanique d'usure, qui peut être inséré de préférence dans une unité (6, 6') de broche du frein (1) à disque et qui est accouplé au mécanisme d'écartement, de préférence au levier (9) tournant de frein, un dispositif capteur d'usure pour détecter une valeur d'usure et un dispositif capteur de course d'actionnement pour détecter une course d'actionnement, le dispositif capteur d'usure et le dispositif capteur de course d'actionnement étant intégrés en un dispositif (34) capteur commun,
dans lequel le mécanisme d'écartement, de préférence le levier (9) tournant de frein, est accouplé au dispositif (34) capteur commun par un arbre (12) de rattrapage du au moins un rattrapeur (10) mécanique d'usure et au dispositif (34) capteur commun par un engrenage (21, 22, 23) intermédiaire, qui a au moins deux étages (22, 23) d'engrenage avec un arbre (27) de transmission, **caractérisé en ce que** l'engrenage (21, 22, 23) intermédiaire a un indicateur (21) d'angle de levier, ayant une partie (20) d'entraînement d'angle de levier, ayant un élément (20a) d'entraînement d'angle de levier, et un arbre (24) intermédiaire, l'élément (20a) d'entraînement d'angle de levier de l'indicateur (21) d'angle de levier étant accouplé à l'arbre (24) intermédiaire par une roue (25) d'entraînement intermédiaire ayant une denture de roue de champ ou une denture de roue conique et dans lequel une roue (26) menée intermédiaire de l'arbre (24) intermédiaire forme, avec une roue (28) menante de transmission de l'arbre (27) de transmission, un premier étage (22) d'engrenage des au moins deux étages (22, 23) d'engrenage.

2. Frein (1) à disque suivant la revendication 1, comportant au moins deux unité (6, 6') de broche, le au moins un rattrapeur (10) mécanique d'usure étant accouplé à un arbre (14) d'entraîneur par un moyen (16) de synchronisation, **caractérisé en ce que** le dispositif (34) capteur commun est disposé sur l'arbre (14) d'entraîneur.

3. Frein (1) à disque suivant l'une des revendications précédentes, **caractérisé en ce que** le dispositif (34) capteur commun est accouplé par un engrenage (30) de superposition à l'arbre (12) de rattrapage du au moins un rattrapeur (10) mécanique d'usure et à l'engrenage (21, 22, 23) intermédiaire.

4. Frein (1) à disque suivant la revendication 3, **caractérisé en ce que** l'engrenage (30) de superposition est un engrenage épicycloïdal.

5. Frein (1) à disque suivant la revendication 4, **caractérisé en ce que** le mécanisme d'écartement, de préférence le levier (9) tournant de frein, est accouplé par l'engrenage (21, 22, 23) intermédiaire au dispositif (34) capteur commun par une roue à denture intérieure de l'engrenage épicycloïdal de l'engrenage (30) de superposition.

6. Frein (1) à disque suivant l'une des revendications 3 à 5, **caractérisé en ce que** le dispositif (34) capteur commun a un capteur d'angle relié à l'engrenage (30) de superposition.

7. Frein (1) à disque suivant la revendication 6, **caractérisé en ce que** le capteur d'angle est un capteur opérant suivant la loi d'Ohm ou à effet de résistance piézoélectrique, thermique, optique, inductif, galvanomagnétique, magnéto-élastique, magnétique, capacitif, piézoélectrique, chimique ou pyroélectrique.

8. Frein (1) à disque suivant l'une des revendications 3 à 7, **caractérisé en ce que** l'engrenage (21, 22, 23) intermédiaire ou/et l'engrenage (30) de superposition est/sont constitués de manière à ce qu'un angle (α) de rotation du dispositif (34) capteur commun soit sur un trajet d'usure d'ensemble du régleur (10) d'usure d'une valeur maximum inférieure ou égale à 360°.

9. Frein (1) à disque suivant l'une des revendications précédentes, **caractérisé en ce que** le dispositif (34) capteur commun est constitué pour l'émission d'un signal de sortie commun pour la valeur d'usure détectée et pour la valeur de course d'actionnement détectée.

10. Frein (1) à disque suivant la revendication 9, **caractérisé en ce que** le dispositif (34) capteur commun est constitué pour l'émission d'un signal de tension commun pour la valeur d'usure détectée et pour la valeur de course d'actionnement détectée.

11. Frein (1) à disque suivant l'une des revendications précédentes, **caractérisé en ce que** le dispositif (34) capteur commun est relié à un circuit d'exploitation, qui est disposé séparément ou/et dans un appareil de commande du frein (1) à disque.

12. Frein (1) à disque suivant l'une des revendications précédentes, **caractérisé en ce que** le frein (1) à disque est à actionnement par l'air comprimé.

13. Procédé de détermination de l'usure et de la course d'actionnement d'un frein (1) à disque suivant l'une des revendications précédentes, **caractérisé par** les stades de procédé :
(S1) relevé d'une valeur d'usure et d'une valeur de course d'actionnement et formation de deux grandeurs (α_{V}, α_{H}) d'entrée ;
(S2) superposition des deux grandeurs (α_{V}, α_{H}) d'entrée formées et émission d'un angle (α) de rotation pour un capteur d'angle ; et
(S3) détermination de la valeur d'usure et de la valeur de course d'actionnement à l'aide de la tension (U) de sortie du capteur d'angle.

14. Procédé suivant la revendication 13, **caractérisé en ce que**, dans le stade de procédé relevé d'une valeur d'usure et d'une valeur de course d'actionnement, on effectue les stades partiels suivants :
(S1.1) formation de la première grandeur (α_{V}) d'entrée sous la forme d'un angle de rotation d'un arbre (12) de rattrapage ou d'un arbre (14) d'entraîneur accouplé en synchronisme à l'arbre (12) de rattrapage ; et
(S1.2) formation de la deuxième grandeur (α_{H}) d'entrée sous la forme d'un angle de rotation d'un engrenage (21, 22, 23) intermédiaire.

15. Procédé suivant la revendication 14, **caractérisé en ce que**, dans le stade de procédé détermination de la valeur d'usure et de la valeur de course d'actionnement, on effectue les stades partiels suivants :
(S3.1) formation d'une différence (Δ_{V}) de tension comme valeur d'usure ;
(S3.2) formation d'une différence (Δ_{H}) de tension comme valeur de course d'actionnement ; et
(S3.3) formation d'une valeur (U_{N}) de tension comme valeur d'usure d'ensemble.

16. Procédé de détermination de l'usure et de la course d'actionnement d'un frein (1) à disque suivant l'une des revendications 1 à 12, **caractérisé par** les stades de procédé suivants :
(S1) relevé d'une valeur d'usure et d'une valeur de course d'actionnement et formation de deux grandeurs (α_{V}, α_{H}) d'entrée ;
(S2) superposition des deux grandeurs (α_{V}, α_{H}) d'entrée formées et émission d'un angle (α) de rotation pour un capteur d'angle ; et
(S3) détermination de la valeur d'usure et de la valeur de course d'actionnement à l'aide de la tension (U) de sortie du capteur d'angle.

17. Procédé suivant la revendication 16, **caractérisé en ce que**, dans le stade de procédé relevé d'une valeur d'usure et d'une valeur de course d'actionnement, on effectue les stades partiels suivants :
(S1.1) formation de la première grandeur (α_{V}) d'entrée sous la forme d'un angle de rotation d'un arbre (12) de rattrapage ou d'un arbre (14) d'entraîneur accouplé en synchronisme à l'arbre (12) de rattrapage ; et
(S1.2) formation de la deuxième grandeur (α_{H}) d'entrée sous la forme d'un angle de rotation d'un engrenage (21, 22, 23) intermédiaire.

18. Procédé suivant la revendication 16 ou 17, **caractérisé en ce que** l'on amplifie mécaniquement au moins l'une des deux grandeurs (α_{V}, α_{H}) d'entrée.

19. Procédé suivant l'une des revendication 16 à 18, **caractérisé en ce que** l'on analyse en continu le signal de sortie du capteur d'angle et on le mémorise sous la forme de ses valeurs.

20. Procédé suivant la revendication 19, **caractérisé en ce que**, dans le stade (S3) de procédé de détermination de la valeur d'usure et de la valeur de course d'actionnement, on utilise, pour une évaluation, tant les valeurs mémorisées du signal de sortie de capteur, qu'également au moins une valeur mise en mémoire, qui est associée à l'usure lors de la dernière évaluation.
